# EUROPEAN PATENT APPLICATION

(11) **EP 4 516 706 A1**
(43) Date of publication of application: **05.03.2025**
(21) Application number: 23796417.6
(22) Date of filing: 26.04.2023
(51) Int. Cl.: B65G 59/04, B25J 15/06

(54) **PROCESSING DEVICE, SUCTION MECHANISM CONTROL UNIT, PROGRAM, PROCESSING SYSTEM, AND SUCTION MECHANISM**

(30) Priority: 28.04.2022 JP 2022074422
(71) Applicant: Kyocera Corporation, Kyoto-shi, Kyoto 612-8501 (JP)
(72) Inventor: UCHITAKE Masahiro, Kyoto-shi, Kyoto 612-8501 (JP); MIKI Masafumi, Kyoto-shi, Kyoto 612-8501 (JP); ISHIDA Takayuki, Kyoto-shi, Kyoto 612-8501 (JP); MIYAMURA Hiroaki, Kyoto-shi, Kyoto 612-8501 (JP)
(74) Representative: TBK
(86) International application number: PCT/JP2023/016408
(87) International publication number: WO 2023/210677

(57) **Abstract**

A processing device includes a suction force specifier that specifies, based on first object information about an object, a suction force from a suction assembly to suck the object.

## Description

### TECHNICAL FIELD

The present disclosure relates to a technique for sucking an object.

### BACKGROUND OF INVENTION

Patent Literature 1 describes a technique for sucking an object.

### CITATION LIST

### PATENT LITERATURE

Patent Literature 1: Japanese Unexamined Patent Application Publication No. 2021-130188

### SUMMARY

One or more aspects of the present disclosure are directed to a processing device, a suction assembly controller, a program, a processing system, and a suction assembly. In one embodiment, a processing device includes a suction force specifier that specifies, based on first object information about an object, a suction force from a suction assembly to suck the object.

In one embodiment, a suction assembly controller is a suction assembly controller that controls the above suction assembly based on a suction force specification result from the above suction force specifier.

In one embodiment, a program causes a computer to function as the above processing device.

In one embodiment, a program causes a computer to function as the above suction assembly controller.

In one embodiment, a processing system includes a suction assembly that sucks an object, and the above processing device that specifies the suction force from the suction assembly to suck the object.

In one embodiment, a suction assembly is a suction assembly for sucking an object. The suction assembly includes a first suction portion, a second suction portion, and a drive. The first suction portion includes a first suction opening. The second suction portion includes a second suction opening smaller than the first suction opening. The second suction portion is movable relative to the first suction portion in the first suction portion. The drive moves the second suction portion relative to the first suction portion in the first suction portion to cause the second suction opening to relatively move in and out of the first suction portion. The drive is switchable between a first state in which the first suction portion sucks the object and a second state in which the second suction portion sucks the object.

### BRIEF DESCRIPTION OF THE DRAWINGS

FIG. 1 is a schematic diagram of an example system.
FIG. 2 is a block diagram of an example robot control device.
FIG. 3 is a block diagram of an example hand control device (processing device).
FIG. 4 is a schematic diagram of an example robot hand.
FIG. 5 is a schematic diagram of an example robot hand.
FIG. 6 is a schematic diagram of an example robot hand.
FIG. 7 is a schematic diagram of an example robot hand.
FIG. 8 is a schematic diagram of an example robot hand.
FIG. 9 is a partial block diagram of the system, illustrating its example structure.
FIG. 10 is a schematic diagram of an example object.
FIG. 11 is a flowchart of example operations of the robot control device and the hand control device.
FIG. 12 is a schematic diagram of multiple suction portions in an example positional relationship.
FIG. 13 is a schematic diagram of the suction portions in an example positional relationship.
FIG. 14 is a schematic diagram of the suction portions in an example positional relationship.
FIG. 15 is a flowchart of example operations of the robot control device and the hand control device.
FIG. 16 is a partial block diagram of a system, illustrating its example structure.
FIG. 17 is a schematic diagram of an example robot hand.
FIG. 18 is a schematic diagram of an example suction portion.
FIG. 19 is a schematic diagram of an example suction portion and an example switcher.
FIG. 20 is a schematic diagram of an example suction portion and an example switcher.
FIG. 21 is a flowchart of example operations of the robot control device and the hand control device.
FIG. 22 is a flowchart of example operations of the robot control device and the hand control device.
FIG. 23 is a schematic diagram of an example robot hand.
FIG. 24 is a block diagram of an example sensor unit.
FIG. 25 is a block diagram of an example storage.
FIG. 26 is a block diagram of an example storage.

### DESCRIPTION OF EMBODIMENTS

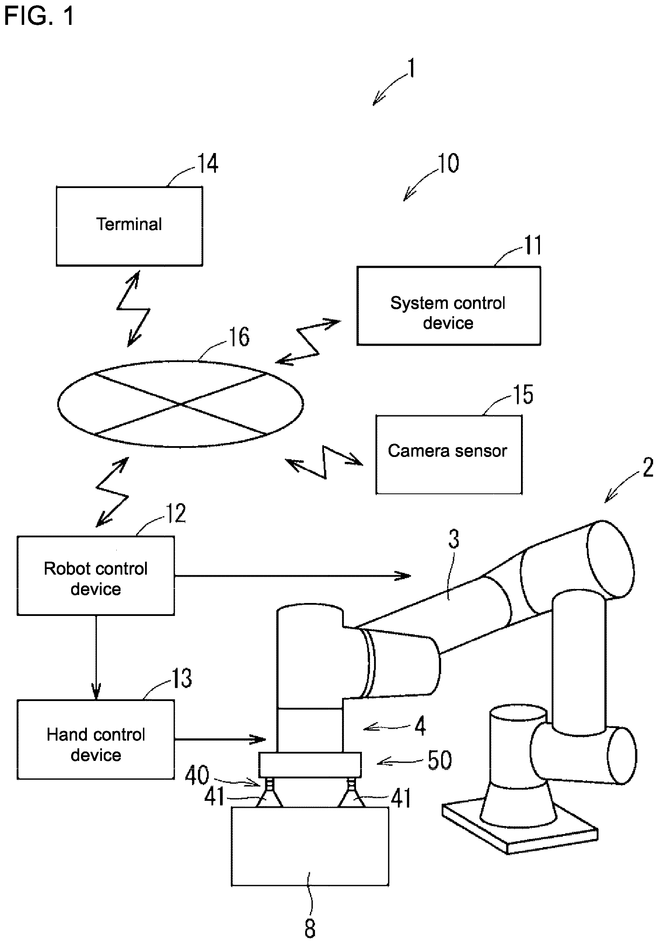

FIG. 1 is a schematic diagram of an example system 1 including a suction assembly 50. The suction assembly 50 can suck an object 8 with a suction force that is changeable. The system 1 is, for example, a robotic system including a robot 2 with the suction assembly 50. Although the system 1 is a robotic system in the example described below, the system 1 may be other than a robotic system. The system 1 that is a robotic system may be referred to as a robotic system 1.

The robotic system 1 includes, for example, the robot 2 and a robot control system 10 that controls the robot 2. The robot control system 10 (also referred to as a control system 10 or a processing system 10) includes, for example, a system control device 11, a robot control device 12, a hand control device 13, a terminal 14, and a camera sensor 15.

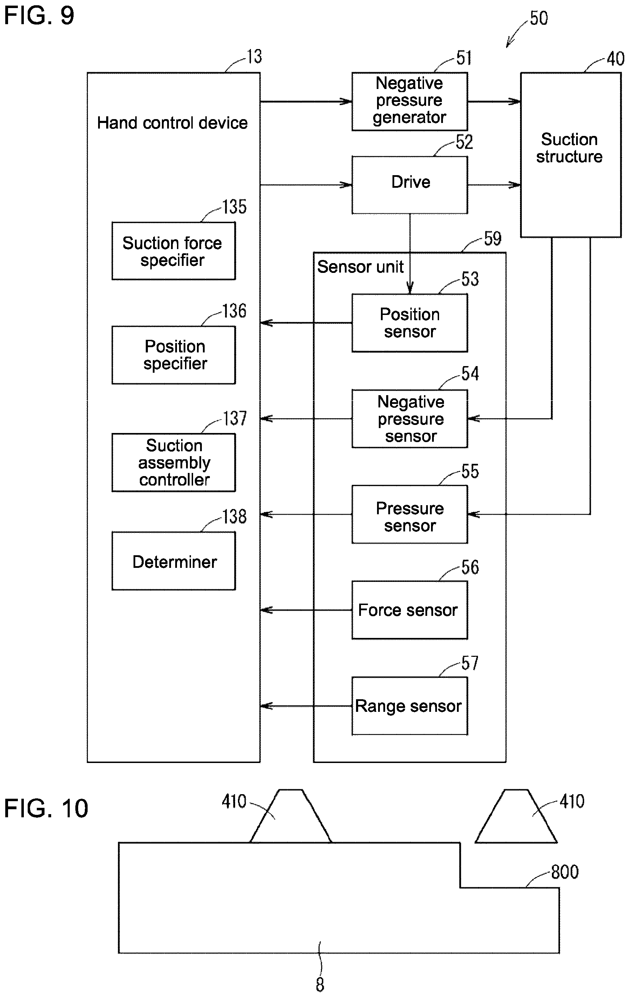

The robot 2 transfers the object 8, for example, from a work-start table to a work-target table. The robot 2 includes, for example, an arm 3 and a robot hand 4 connected to the arm 3. The robot hand 4 includes, for example, the suction assembly 50 that can suck and hold a single object 8. The suction assembly 50 includes, for example, a suction structure 40 including at least one suction portion 41 that sucks the single object 8, and a negative pressure generator 51 (refer to FIG. 9 described later) that generates a negative pressure in the suction portion 41. The suction assembly 50 includes, for example, a drive 52 (refer to FIG. 9 described later) that changes the position of at least one suction portion 41. The robot 2 sucks, for example, the object 8 on the work-start table with the suction structure 40. The robot 2 moves the arm 3 with the suction structure 40 sucking the object 8 to transfer the object 8 to the work-target table. The object 8 is also referred to as a workpiece. Note that the robot 2 may perform any work other than the above example work. In the example described below, the suction structure 40 includes multiple suction portions 41. However, the suction structure 40 may include a single suction portion 41.

The system control device 11, the robot control device 12, the terminal 14, and the camera sensor 15 are connected to, for example, a network 16 including the Internet. The system control device 11, the robot control device 12, the terminal 14, and the camera sensor 15 can communicate with one another through the network 16. Note that the hand control device 13 may be connected to the network 16. At least two selected from the group consisting of the system control device 11, the robot control device 12, the hand control device 13, the terminal 14, and the camera sensor 15 may communicate directly with each other without using the network 16. Each of the system control device 11, the robot control device 12, the hand control device 13, and the terminal 14 may be a processing device.

The camera sensor 15 can capture, for example, an image of a work area of the robot 2. The camera sensor 15 can capture, for example, an image of the object 8. The camera sensor 15 can generate, for example, a range image including information about the distance to each measuring point within the work area, and a color image including the object 8. The camera sensor 15 is also referred to as a three-dimensional (3D) camera. The camera sensor 15 can output the generated range image and the generated color image to the network 16.

The system control device 11 manages an overall operation of the robot control system 10. The system control device 11 is, for example, a computer. The system control device 11 may be, for example, a cloud server.

The terminal 14 can receive inputs from a user and provide notifications to the user. The terminal 14 is, for example, a computer. The terminal 14 may be, for example, a desktop or laptop personal computer, a tablet terminal, a mobile phone such as a smartphone, or any other device. The user can input, for example, information for controlling the robot 2 into the terminal 14.

The terminal 14 includes, for example, an input unit that receives inputs from the user and a notifier that provides notifications to the user. The input unit may include, for example, a mouse and a keyboard. The input unit may include a touch sensor to receive touch operations performed by the user. The notifier may include a display to display various items of information. The display may be, for example, a liquid crystal display, an organic electroluminescent (EL) display, or a plasma display panel. When the input unit includes the touch sensor, the touch sensor and the display may together serve as a touchscreen display that performs display and detects touches. The touchscreen display can detect touch operations on a display surface of the display. The notifier may include a speaker. The input unit and the notifier serve as a user interface.

The robot control device 12 manages an overall operation of the robot 2. For example, the robot control device 12 can control the arm 3. The robot control device 12 controls the position and the orientation of the arm 3 to transfer the object 8 held by the robot hand 4 from the work-start table to the work-target table.

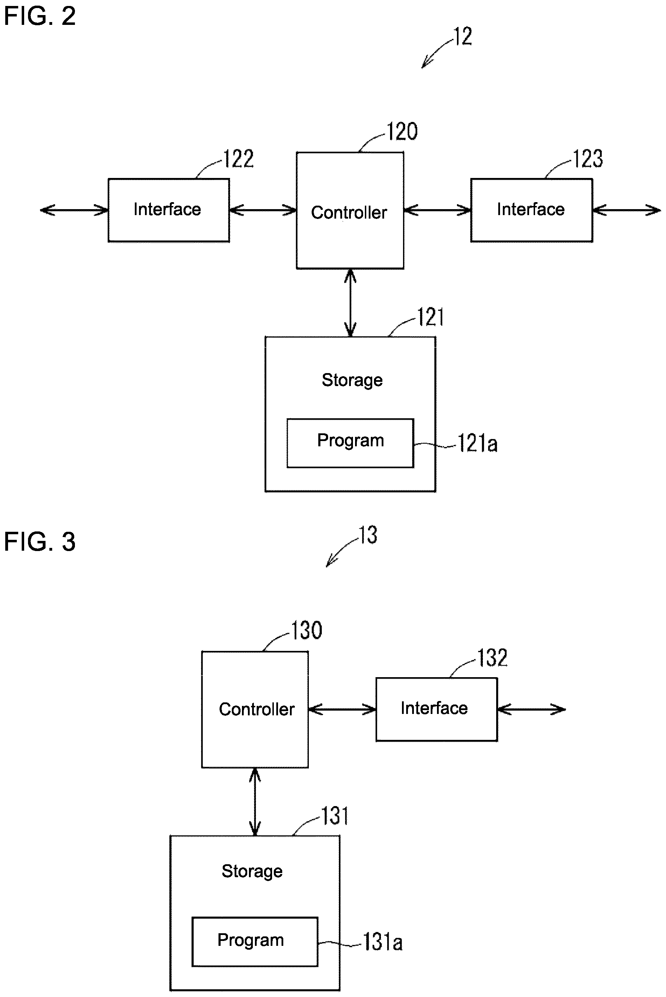

FIG. 2 is a block diagram of the robot control device 12, illustrating its example structure. As illustrated in FIG. 2, the robot control device 12 includes, for example, a controller 120, a storage 121, an interface 122, and an interface 123. The robot control device 12 may be, for example, a control circuit. The robot control device 12 is, for example, a computer.

The interface 122 can communicate with the network 16 based on, for example, a communication standard such as Wi-Fi. The interface 122 may be, for example, an interface circuit. The interface 122 may be, for example, a communicator or a communication circuit. The interface 122 may be connected to the network 16 with wires or wirelessly. The interface 122 receives information from the network 16 and inputs the information into the controller 120. The interface 122 outputs information from the controller 120 to the network 16.

The interface 123 can transmit and receive information to and from the hand control device 13. The controller 120 can transmit and receive information to and from the hand control device 13 through the interface 123. The interface 123 may be, for example, an interface circuit.

The controller 120 can control other components of the robot control device 12 to centrally manage an operation of the robot control device 12. The controller 120 may be, for example, a control circuit. The controller 120 includes at least one processor that performs control and processing for implementing various functions, as described in more detail below.

In various embodiments, at least one processor may be a single integrated circuit (IC), or multiple ICs, multiple discrete circuits, or both these circuits connected to one another for mutual communication. At least one processor may be implemented using any of various known techniques.

In one embodiment, the processor includes one or more circuits or units configured to perform one or more data computation procedures or processes by, for example, executing instructions stored in an associated memory. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors (DSPs), programmable logic devices, field programmable gate arrays, combinations of any of these devices or configurations, or combinations of other known devices and configurations. The processor may perform the functions described below.

The controller 120 may include, for example, a central processing unit (CPU) as the processor. The storage 121 may include a non-transitory recording medium readable by the CPU in the controller 120, such as a read-only memory (ROM) and a random-access memory (RAM). The storage 121 may include, for example, a nonvolatile RAM (NVRAM) as a nonvolatile memory. The storage 121 stores, for example, a program 121a for controlling the robot control device 12. The various functions of the controller 120 are implemented by, for example, the CPU in the controller 120 executing the program 121a in the storage 121.

Note that the controller 120 may have any structure other than the above example structure. For example, the controller 120 may include multiple CPUs. The controller 120 may also include at least one DSP. The functions of the controller 120 may be implemented entirely or partially by a hardware circuit, without using software to implement the functions. The storage 121 may also include a non-transitory computer-readable recording medium other than the ROM and the RAM. The storage 121 may include, for example, a small hard disk drive and a solid-state drive (SSD).

The hand control device 13 as a processing device can control the robot hand 4. The hand control device 13 may be located inside the robot hand 4 or outside the robot hand 4. The hand control device 13 obtains information directed to the hand control device 13 from the network 16 through the robot control device 12. The hand control device 13 outputs information directed to the network 16 through the robot control device 12 to the network 16. FIG. 3 is a block diagram of the hand control device 13, illustrating its example structure.

As illustrated in FIG. 3, the hand control device 13 includes, for example, a controller 130, a storage 131, and an interface 132. The hand control device 13 may be, for example, a control circuit. The hand control device 13 is, for example, a computer.

The interface 132 can transmit and receive information to and from interface 123 in the robot control device 12. The controller 130 can transmit and receive information to and from the robot control device 12 through the interface 132. The interface 132 may be, for example, an interface circuit.

The controller 130 can control other components of the hand control device 13 to centrally manage an operation of the hand control device 13. The controller 130 may be, for example, a control circuit. The controller 130 includes at least one processor that performs control and processing for implementing various functions, as described in more detail below. The processor included in the controller 130 may be the same as or similar to the processor included in the controller 120 in the robot control device 12 described above.

The controller 130 may include, for example, a CPU as the processor. The storage 131 may include a non-transitory recording medium readable by the CPU in the controller 130, such as a ROM and a RAM. The storage 131 may include, for example, an NVRAM as a nonvolatile memory. The storage 131 stores, for example, a program 131a for controlling the hand control device 13. The various functions of the controller 130 are implemented by, for example, the CPU in the controller 130 executing the program 131a in the storage 131.

Note that the controller 130 may have any structure other than the above example structure. For example, the controller 130 may include multiple CPUs. The controller 130 may also include at least one DSP. The functions of the controller 130 may be implemented entirely or partially by a hardware circuit, without using software to implement the functions. The storage 131 may also include a non-transitory computer-readable recording medium other than the ROM and the RAM, in the same manner as or in a similar manner to the storage 121.

In the processing system 10 with the above structure, the information output from the terminal 14 can be input into the robot control device 12 or the hand control device 13 through, for example, the system control device 11. The information output from the robot control device 12 or the hand control device 13 can be input into the terminal 14 through, for example, the system control device 11. The range image and the color image output from the camera sensor 15 may be input into the robot control device 12 or the hand control device 13 through, for example, the system control device 11.

Note that the information output from the terminal 14 may be input into the robot control device 12 or the hand control device 13 without being through the system control device 11. The information output from the robot control device 12 or the hand control device 13 may be input into the terminal 14 without being through the system control device 11. The range image and the color image output from the camera sensor 15 may be input into the robot control device 12 or the hand control device 13 without being through the system control device 11.

The robot control system 10 may include multiple system control devices 11. The robot control system 10 may include multiple robot control devices 12. The robot control system 10 may include multiple hand control devices 13. The robot control system 10 may include multiple terminals 14. The robotic system 1 may include multiple robots 2. In this case, each of the robots 2 may be controlled by at least one robot control device 12. The robot hand 4 included in each of the robots 2 may be controlled by at least one hand control device 13.

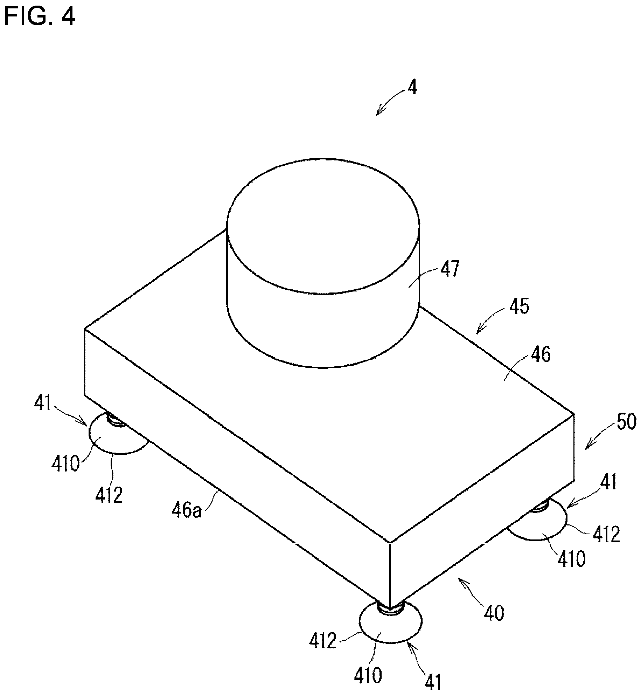

FIGs. 4 to 8 are each a schematic diagram of an example of the robot hand 4. As illustrated in FIGs. 4 to 8, the robot hand 4 includes, for example, an outer case 45 accommodating multiple components, and the suction structure 40 protruding from the outer case 45. The outer case 45 includes, for example, a body 46 and a connection portion 47 connected to the arm 3. The connection portion 47 corresponds to a wrist of the robot hand 4. The connection portion 47 is hereafter also referred to as a wrist 47. The body 46 accommodates, for example, the negative pressure generator 51 and the drive 52. The robot hand 4 includes the suction assembly 50 including the suction structure 40, the negative pressure generator 51, and the drive 52.

The suction structure 40 includes, for example, four suction portions 41. Each of the suction portions 41 protrudes from a bottom surface 46a of the body 46. Each of the suction portions 41 is movable along the bottom surface 46a. Each of the suction portions 41 is movable along a plane on the bottom surface 46a. Each of the suction portions 41 is independently movable, or in other words, is individually movable. The positional relationship between the suction portions 41 can be changed along a plane parallel to the bottom surface 46a. In the robot hand 4, the positional relationship between the suction portions 41 can be changed. Each of the suction portions 41 is also referred to as, for example, a suction nozzle. The bottom surface 46a of the body 46 is, for example, rectangular.

Each of the suction portions 41 includes a suction pad 410 at an end. Each of the suction pads 410 is, for example, an elastic member made of synthetic rubber. Each of the suction pads 410 is hollow and includes a suction opening 411. The suction openings 411 in the suction pads 410 have, for example, the same size. The suction openings 411 in the suction pads 410 have, for example, the same shape. When the suction portion 41 sucks the object 8, the suction opening 411 in the suction pad 410 is covered with the object 8 with an opening edge 412 of the suction opening 411 in contact with the object 8. The pressure in the suction pad 410 is reduced by the negative pressure generator 51 (described later) to cause the opening edge 412 of the suction pad 410 to be in tight contact with the object 8. The suction pad 410 thus sucks the object 8. The suction pad 410 sucking the object 8 elastically deforms and contracts under the reduced pressure in the suction pad 410. In this state, the suction pad 410 has a lower height, or the suction opening 411 has a smaller diameter. The suction pad 410 may be a flat pad as illustrated in the examples in FIGs. 4 to 8, or may be a bellows pad. The suction pad 410 is also referred to as a vacuum pad. The suction pads 410 are, for example, located in the same plane. The suction pads 410 are arranged along the bottom surface 46a of the body 46. An imaginary plane in which the suction pads 410 are located is hereafter referred to as a pad placement plane. The pad placement plane is, for example, parallel to the bottom surface 46a.

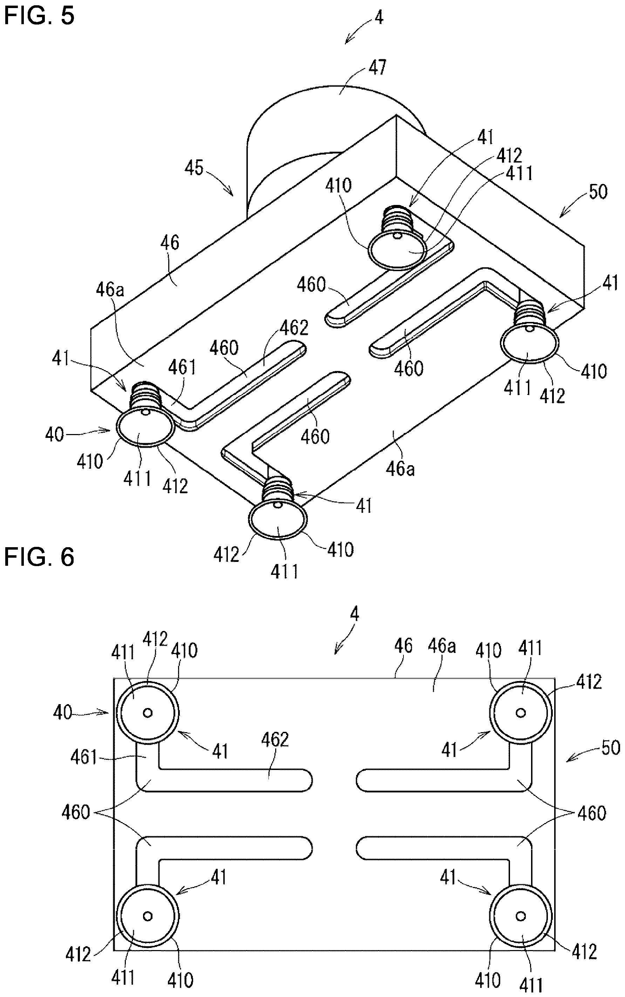

As illustrated in FIGs. 5 to 8, the bottom surface 46a of the body 46 of the outer case 45 includes multiple grooves 460 for the respective suction portions 41. The grooves 460 are spaced from each other. Each of the suction portions 41 partially protrudes through the corresponding groove 460. Each of the suction portions 41 is movable along the corresponding groove 460. In this structure, the suction pad 410 in each of the suction portions 41 is movable along the groove 460 corresponding to the suction portion 41. Note that the multiple suction portions 41 may be located in a single groove. In the examples in FIGs. 5 to 8, the suction portions 41 are located in the respective grooves 460 individually. This can avoid interference between the suction portions 41 during position control for the suction portions 41.

Each of the grooves 460 is, for example, L-shaped. Each of the grooves 460 includes a first groove 461 and a second groove 462. The second groove 462 extends from one longitudinal end of the first groove 461 in a direction different from a direction in which the first groove 461 extends. The second groove 462 extends from the first groove 461, for example, perpendicularly to the first groove 461. The first groove 461 starts from one corner of the bottom surface 46a and extends along a short side of the bottom surface 46a to nearly the center of the short side. The second groove 462 starts from one of the longitudinal ends of the first groove 461, or specifically from an end of the first groove 461 adjacent to the center of the short side of the bottom surface 46a, and extends along a long side of the bottom surface 46a to nearly the center of the long side.

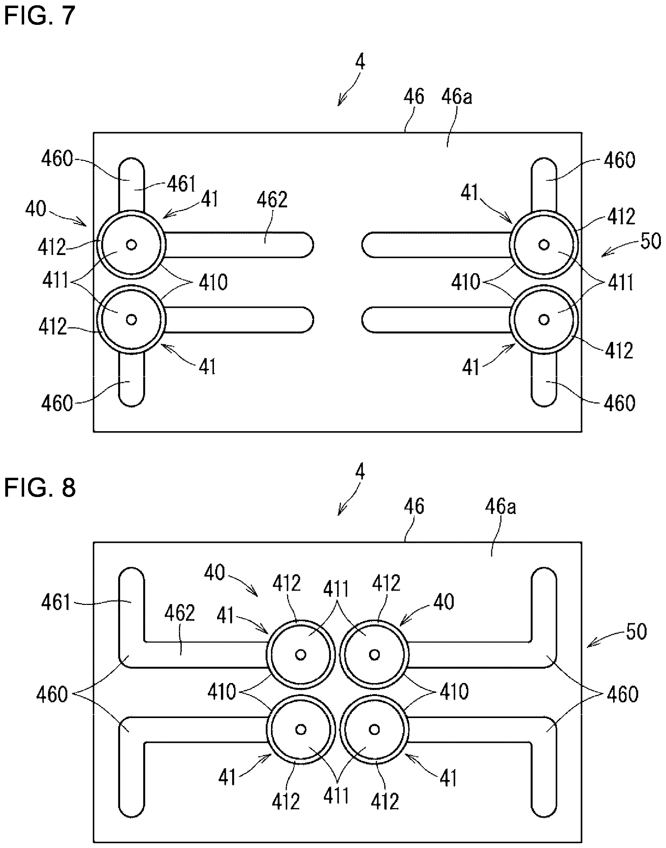

FIGs. 6 to 8 illustrate the suction portions 41 with their positional relationship being changed. In the example in FIG. 6, each of the suction portions 41 is located at an end of the first groove 461 in the corresponding groove 460 adjacent to a corner of the bottom surface 46a. The four suction portions 41 included in the suction structure 40 are thus located at the respective four corners of the bottom surface 46a. After each of the suction portions 41 in FIG. 6 moves along the first groove 461, the suction portions 41 have, for example, the positional relationship illustrated in FIG. 7. In the example in FIG. 7, each of the suction portions 41 is located at a corner of the corresponding groove 460 (specifically, a boundary between the first groove 461 and the second groove 462). After each of the suction portions 41 in FIG. 7 moves along the second groove 462, the suction portions 41 have, for example, the positional relationship illustrated in FIG. 8. In the example in FIG. 8, each of the suction portions 41 is located at an end of the second groove 462 in the corresponding groove 460 opposite to the first groove 461. The suction portions 41 are thus located at the center of the bottom surface 46a.

As described above, each of the grooves 460 includes the first groove 461 and the second groove 462 that extend in different directions. Each of the suction portions 41 is thus movable in two directions along the plane parallel to the bottom surface 46a. Thus, the positional relationship between the suction portions 41 can be changed in the two directions along the plane parallel to the bottom surface 46a.

Note that each of the grooves 460 may have any shape other than the above example shape. Instead of being L-shaped as in the examples in FIGs. 5 to 8, each of the grooves 460 may be, for example, U-shaped with one first groove 461 and two facing second grooves 462, or may be U-shaped with one second groove 462 and two facing first grooves 461. Each of the grooves 460 may be square with two facing first grooves 461 and two facing second grooves 462. Each of the grooves 460 may be linear with one first groove 461 or one second groove 462. Although the grooves 460 have the same shape in the examples in FIGs. 5 to 8, the grooves 460 may have different shapes. One or more of the grooves 460 may have a shape different from the shape of the others. When each of the grooves 460 includes at least two grooves extending in different directions, each of the suction portions 41 is movable in at least two directions along the plane parallel to the bottom surface 46a. In this case, the positional relationship between the suction portions 41 can be changed in at least two directions along the plane parallel to the bottom surface 46a.

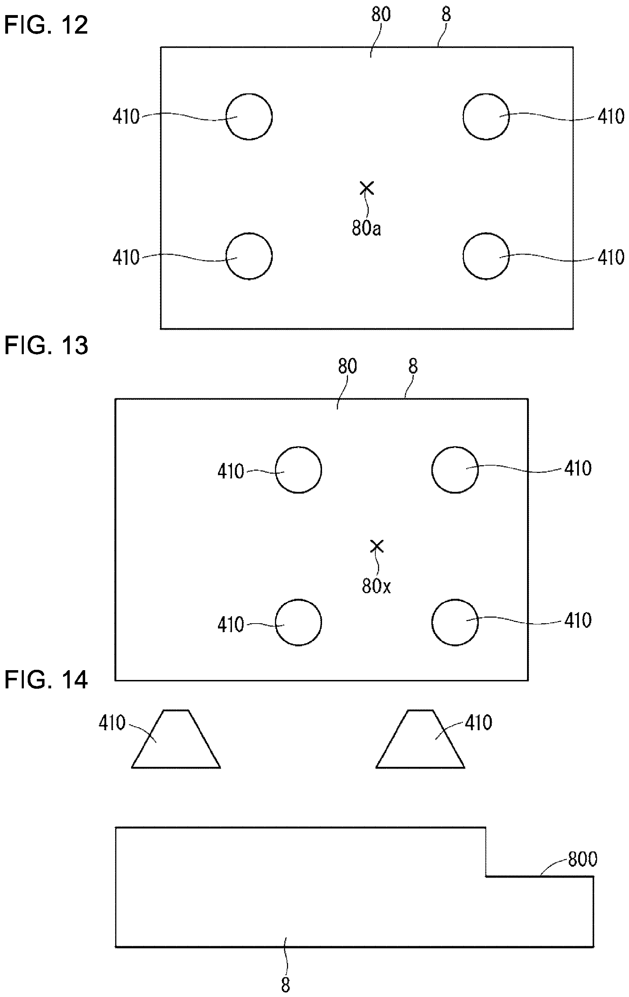

Note that the suction portions 41 may have any degree of freedom of movement other than that in the above example. The positional relationship between the suction portions 41 is set based on object information about the object 8, as described later. Each of the suction portions 41 may have the degree of freedom of movement set as appropriate to achieve the positional relationship between the suction portions 41 in the examples described later (e.g., the examples in FIGs. 12 to 14 described later).

FIG. 9 is a block diagram of the robotic system 1, illustrating its example structure for the control of the robot hand 4. As illustrated in FIG. 9, the robot 2 includes, for example, the negative pressure generator 51, the drive 52, and a sensor unit 59 to obtain various items of information about the robot 2.

The negative pressure generator 51 included in the suction assembly 50 is connected to the suction portions 41 to generate a negative pressure in each of the suction pads 410 and reduce the pressure in the suction pad 410. The negative pressure generator 51 is controlled by the hand control device 13. The negative pressure generator 51 can also stop generating the negative pressure in each of the suction pads 410. When generation of the negative pressure is stopped in the suction pads 410 sucking the object 8, the suction pads 410 release the suction of the object 8. When the negative pressure in each of the suction pads 410 is lower, the suction force from the suction pad 410 (in other words, the suction force from the suction portion 41 including the suction pad 410) is greater.

The negative pressure generator 51 can change, under the control of the hand control device 13, the suction force from the suction assembly 50 to suck the object 8. When the suction assembly 50 includes the multiple suction portions 41 as in the examples in FIGs. 4 to 8, a change in the suction force from the suction assembly 50 refers to a change in the suction force from at least one of the suction portions 41. When the suction assembly 50 releases the suction of the object 8, the suction force from the suction assembly 50 may be changed to zero. The suction force from the suction assembly 50 to release the suction of the object 8 (specifically, a suction force of zero) is not included in the suction force from the suction assembly 50 to suck the object 8.

The negative pressure generator 51 includes, for example, a vacuum pump. The negative pressure generator 51 may change the suction force individually for each of the suction portions 41. In this case, the negative pressure generator 51 may include multiple vacuum pumps that generate negative pressures in the respective suction portions 41. The negative pressure generator 51 may collectively change the suction forces from the multiple suction portions 41. In this case, the negative pressure generator 51 may include a single vacuum pump that generates a negative pressure in the multiple suction portions 41. The suction force from each of the suction portions 41 is determined based on the negative pressure in the suction pad 410 in the suction portion 41 and the size (specifically, the area) of the suction opening 411 in the suction pad 410. The negative pressure generator 51 can change the suction force from the suction portion 41 by changing the negative pressure generated in the suction pad 410 in the suction portion 41. The negative pressure generator 51 is located in, for example, the body 46 of the outer case 45 in the robot hand 4. Note that the negative pressure generator 51 may include an ejector that creates a vacuum using compressed air.

The drive 52 included in the suction assembly 50 can move, for example, each of the suction portions 41. In other words, the drive 52 can change the position of each of the suction portions 41. In still other words, the drive 52 can change the positional relationship between the suction portions 41. The drive 52 is controlled by the hand control device 13.

The drive 52 may include, for example, an electric actuator such as a motor. The drive 52 may move each of the suction portions 41 individually. In other words, the drive 52 may change the position of each of the suction portions 41 individually. In this case, the drive 52 may include multiple electric actuators that move the respective suction portions 41. The drive 52 may collectively move the multiple suction portions 41. In other words, the drive 52 may collectively change the positions of the multiple suction portions 41. In this case, the drive 52 may include a single electric actuator to collectively move the multiple suction portions 41. The drive 52 is located in, for example, the body 46 of the outer case 45 in the robot hand 4.

The sensor unit 59 includes multiple types of sensors. The sensor unit 59 includes, for example, a position sensor 53, a negative pressure sensor 54, a pressure sensor 55, a force sensor 56, and a range sensor 57. The detection result from each of the position sensor 53, the negative pressure sensor 54, the pressure sensor 55, the force sensor 56, and the range sensor 57 is input into the hand control device 13.

The position sensor 53 can detect the rotational position of the motor included in the drive 52. The position sensor 53 is, for example, a rotary encoder. When the drive 52 includes multiple motors, the sensor unit 59 may include multiple position sensors 53 that detect the rotational positions of the respective motors. A suction assembly controller 137 (described later) included in the hand control device 13 identifies the position of each of the suction portions 41 based on the detection result from at least one position sensor 53 included in the sensor unit 59. The suction assembly controller 137 controls the drive 52 based on the identification result to set the position of each of the suction portions 41 to an intended position. In other words, the suction assembly controller 137 controls the drive 52 based on the identification result to set the positional relationship between the suction portions 41 to an intended positional relationship. The position sensor 53 is located in, for example, the body 46 of the outer case 45.

The sensor unit 59 includes multiple negative pressure sensors 54 for the respective suction portions 41. Each of the negative pressure sensors 54 can detect the negative pressure in the suction pad 410 in the corresponding suction portion 41. The negative pressure sensor 54 may be a semiconductor sensor, a metal thin-film sensor, or any other sensor. The negative pressure sensor 54 is located in, for example, the body 46 of the outer case 45.

The sensor unit 59 includes multiple pressure sensors 55 for the respective suction portions 41. Each of the pressure sensors 55 detects the contact pressure applied to the object 8 by the suction pad 410 in the corresponding suction portion 41. When the suction pad 410 is made of pressure-sensitive conductive rubber, for example, the suction pad 410 may be a part of the corresponding pressure sensor 55. The pressure-sensitive conductive rubber refers to rubber with its electrical resistance varying with a pressure applied. When the suction pad 410 is made of the pressure-sensitive conductive rubber, the electrical resistance of the suction pad 410 varies with the contact pressure applied to the object 8 by the suction pad 410. The pressure sensor 55 may detect the electrical resistance of the suction pad 410 made of the pressure-sensitive conductive rubber, and may output the detection result as the contact pressure applied to the object 8 by the suction pad 410. Note that the pressure sensor 55 may be a semiconductor sensor or a metal thin-film sensor. In this case, the pressure sensor 55 may be located at the opening edge 412 of the suction pad 410.

The force sensor 56 is located in, for example, the wrist 47 on the outer case 45. The force sensor 56 can detect, for example, a force and a moment applied to the robot hand 4. The force sensor 56 is, for example, a six-axis force sensor. The force sensor 56 can detect a force along an x-axis applied to the robot hand 4, a force along a y-axis applied to the robot hand 4, and a force along a z-axis applied to the robot hand 4. The force sensor 56 can also detect a moment about the x-axis applied to the robot hand 4, a moment about the y-axis applied to the robot hand 4, and a moment about the z-axis applied to the robot hand 4. The z-axis is, for example, perpendicular to the bottom surface 46a of the body 46 of the outer case 45. The x-axis is perpendicular to the z-axis, and the y-axis is perpendicular to the z-axis and the x-axis. The x-axis and the y-axis are parallel to the bottom surface 46a. The force sensor 56 may be, for example, an electrical resistance sensor, a capacitance sensor, a piezoelectric sensor, or an optical sensor.

The sensor unit 59 includes multiple range sensors 57 for the respective suction portions 41. Each of the range sensors 57 detects the distance between the corresponding suction portion 41 and the object 8. The range sensor 57 is also referred to as a distance measurement sensor. The range sensor 57 may be, for example, an optical sensor using laser beams, a radio wave sensor using millimeter waves, or an ultrasonic sensor using ultrasonic waves. The range sensor 57 is located on, for example, a portion of the suction portion 41 other than the suction pad 410. The distance detected by the range sensor 57 is shorter when the suction pad 410 is pressed against the object 8 and deforms. The distance detected by the range sensor 57 indicates strength with which the suction pad 410 is pressed against the object 8, or in other words, the tightness of contact of the suction pad 410 with the object 8. The distance detected by the range sensor 57 also indicates the suction condition of the suction pad 410 sucking the object 8.

The controller 130 in the hand control device 13 can control the robot hand 4 based on the detection results from the sensor unit 59. The controller 130 can control the suction force from the suction structure 40 by controlling the negative pressure generator 51. The controller 130 can control the position of each of the suction portions 41 in the suction structure 40 by controlling the drive 52.

The CPU in the controller 130 executes the program 131a in the storage 131 to implement, as functional blocks, a suction force specifier 135, a position specifier 136, the suction assembly controller 137, and a determiner 138 in the controller 130. Note that the functions of the suction force specifier 135 may be implemented entirely or partially by a hardware circuit, without using software to implement the functions. The position specifier 136, the suction assembly controller 137, and the determiner 138 also have the same or a similar structure.

The suction force specifier 135 specifies, based on first object information about the object 8, the suction force from the suction assembly 50 to suck the object 8. Unless otherwise specified, the suction force herein refers to a suction force to suck the object 8. When the suction assembly 50 includes the multiple suction portions 41, specifying the suction force from the suction assembly 50 refers to specifying the suction force from at least one of the suction portions 41.

The suction force specifier 135 specifies, for example, the suction force from each of the suction portions 41 based on the first object information. The suction force specifier 135 can specify the suction force from the suction portion 41 for each object 8 using the first object information. For example, the suction force specifier 135 can specify the suction force from the suction portion 41 based on the type of the object 8. Note that the suction portion 41 can have the same suction force for sucking different types of objects 8 as a result of the suction force specifier 135 specifying the suction force from the suction portion 41 for the different types of objects 8 based on their first object information.

The position specifier 136 specifies the position of each of the suction portions 41 based on second object information about the object 8. In other words, the position specifier 136 specifies the positional relationship between the suction portions 41 based on the second object information. The position specifier 136 can specify the position of the suction portion 41 for each object 8 using the second object information. For example, the position specifier 136 can specify the position of the suction portion 41 based on the type of the object 8. In other words, the position specifier 136 can specify the positional relationship between the suction portions 41 for each object 8. Note that the position of the suction portion 41 can be the same for different types of objects 8 as a result of the position specifier 136 specifying the position of the suction portion 41 for the different types of objects 8 based on their second object information.

The suction assembly controller 137 controls the negative pressure generator 51 based on the suction force specification result from the suction force specifier 135. The suction assembly controller 137 can cause the negative pressure generator 51 to change the suction force from the suction assembly 50. The suction assembly controller 137 controls the negative pressure generator 51 to generate a negative pressure in the suction pad 410 in each of the suction portions 41 to cause the suction portion 41 to have the suction force specified by the suction force specifier 135. In this example, the controller 130 can control the suction forces from all the suction portions 41 based on the first object information. However, the controller 130 may control the suction force from one or more of the suction portions 41.

The suction assembly controller 137 controls the drive 52 based on the specification result from the position specifier 136. The suction assembly controller 137 can cause the drive 52 to change the position of each of the suction portions 41. The suction assembly controller 137 controls the drive 52 to cause each of the suction portions 41 to be at the position specified by the position specifier 136. In this example, the controller 130 can control the positions of all the suction portions 41. However, the controller 130 may control the position of one or more of the suction portions 41. In this case, the groove 460 may be eliminated for the suction portion 41 that is not subject to position control.

The first object information and the second object information are stored in the storage 131. Each of the first object information and the second object information is updated, for example, for each change of the type of the object 8. The first object information may be the same as or different from the second object information. When the first object information and the second object information are the same, the first object information and the second object information may be prepared as common object information to be used by the suction force specifier 135 and the position specifier 136, rather than being prepared separately. Such common object information may be used as both the first object information and the second object information.

The first object information may include, for example, weight information indicating the weight of the object 8 (also referred to as an object weight). The first object information may also include first area information indicating an area (suction-inaccessible area) on a surface of the object 8 that is inaccessible to sucking performed by the suction assembly 50. For example, as illustrated in FIG. 10, the object 8 may include an area 800 (also referred to as a section 800) on the surface of the object 8 that is lower than surrounding areas and inaccessible to sucking performed by the suction pads 410. The area 800 is referred to as a suction-inaccessible area 800. FIG. 10 illustrates examples of the object 8 and the suction pads 410 as viewed in a direction along the pad placement plane.

The first object information may also include second area information indicating an area (suction-prohibited area) that is prohibited from being sucked by the suction assembly 50. The suction-prohibited area may include, for example, an area on the surface of the object 8 that may be damaged when sucked by the suction pads 410. The suction-prohibited area may also include, for example, an area on the surface of the object 8 that may deform when sucked by the suction pads 410.

The first object information may also include tilt limitation information indicating a limitation of tilt of the object 8 (also referred to as a tilt limitation). The tilt limitation may include, for example, a tilt tolerance indicating the degree to which the object 8 is allowed to tilt while the object 8 is being held and transferred by the suction assembly 50. The tilt tolerance may be expressed in, for example, an angle.

The second object information may include, for example, shape information indicating the shape of the object 8 (also referred to as an object shape). The shape information may be, for example, 3D point cloud data indicating the object shape or 3D CAD data about the object 8. The second object information may also include center-of-gravity position information indicating the position of the center of gravity of the object 8 (also referred to as an object center-of-gravity position). The second object information may also include the first area information. The second object information may also include the second area information.

At least one selected from the group consisting of the weight information, the first area information, the second area information, the tilt limitation information, the shape information, and the center-of-gravity position information may be input by the user into the robot control system 10. In this case, the user may input at least one selected from the group consisting of the weight information, the first area information, the second area information, the tilt limitation information, the shape information, and the center-of-gravity position information into, for example, the terminal 14. At least one selected from the group consisting of the weight information, the first area information, the second area information, the tilt limitation information, the shape information, and the center-of-gravity position information input into the terminal 14 is input into the hand control device 13 and stored into the storage 131.

The shape information may be generated by the controller 130 in the hand control device 13. In this case, for example, the position specifier 136 may generate the shape information based on the range image and the color image obtained from the camera sensor 15 to use the shape information. In this case, the range image and the color image output from the camera sensor 15 are input into the hand control device 13 and stored into the storage 131. The position specifier 136 generates, for example, 3D point cloud data indicating the object shape based on the range image and the color image in the storage 131. The 3D point cloud data generated by the position specifier 136 is stored into the storage 131 as the shape information. Note that the shape information may be generated by the controller 120 in the robot control device 12.

The center-of-gravity position information may be generated by the controller 130. In this case, for example, the position specifier 136 may generate the center-of-gravity position information based on the range image and the color image obtained from the camera sensor 15 to use the center-of-gravity position information. In this case, for example, the position specifier 136 generates the 3D point cloud data indicating the object shape based on the range image and the color image, in the same manner as or in a similar manner to when generating the shape information. The position specifier 136 then identifies the object center-of-gravity position based on the generated 3D point cloud data. The position specifier 136 generates the center-of-gravity position information indicating the identified object center-of-gravity position, and stores the generated information into the storage 131. The position specifier 136 may identify the object center-of-gravity position based on the 3D CAD data about the object 8 stored in the storage 131, and may generate the center-of-gravity position information indicating the identified object center-of-gravity position. Note that the center-of-gravity position information may be generated by the controller 120 in the robot control device 12.

The determiner 138 determines the suction state of the suction assembly 50 sucking the object 8 based on the detection result from at least one sensor in the sensor unit 59. For example, the determiner 138 determines the suction state of the suction assembly 50 sucking the object 8 based on the detection result from at least one sensor selected from the group consisting of the negative pressure sensor 54, the pressure sensor 55, the force sensor 56, and the range sensor 57. The suction state hereafter refers to the suction state of the suction assembly 50 sucking the object 8 (in other words, the suction state of the suction structure 40 sucking the object 8).

The hand control device 13 may provide an alert to outside the hand control device 13 based on the determination result from the determiner 138. For example, the interface 132 in the hand control device 13 may provide the alert to the robot control device 12. In this case, the interface 132 functions as a notifier that provides the alert.

### Example Operation of Robot Control System

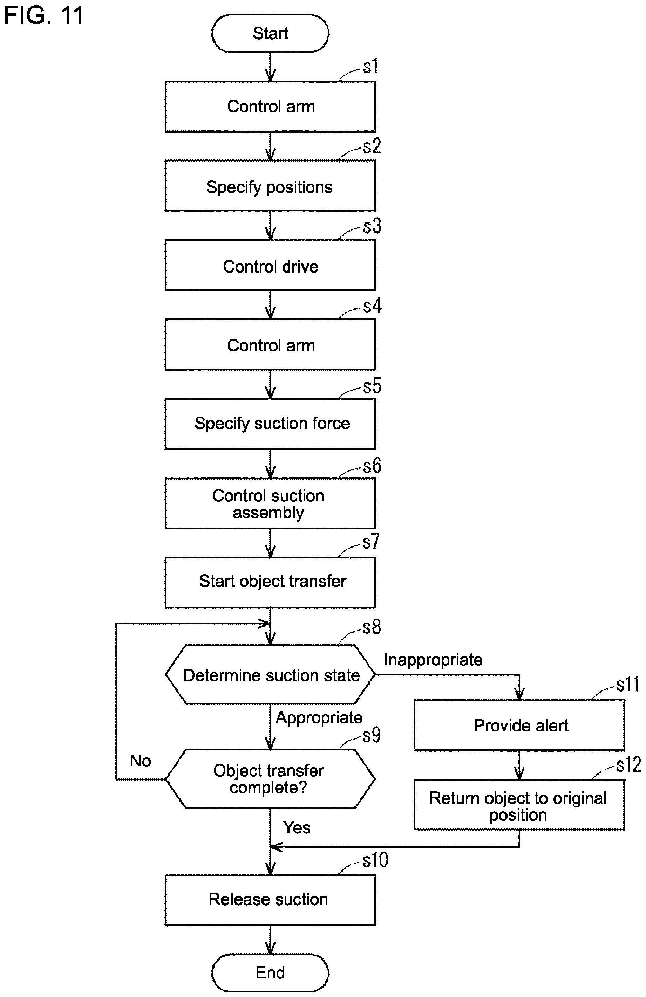

FIG. 11 is a flowchart of example operations of the robot control device 12 and the hand control device 13 performed when the robot 2 transfers the object 8 from the work-start table to the work-target table. For example, the terminal 14 receives, from the user, a work-start instruction to instruct the robot 2 to start work. The work-start instruction received by the terminal 14 is input into the robot control device 12 and the hand control device 13.

In the robot control device 12 receiving the work-start instruction, the controller 120 recognizes, in step s1, the object 8 on the work-start table based on the range image and the color image output from the camera sensor 15. The controller 120 controls the position and the orientation of the arm 3 to position the robot hand 4 above the object 8 based on the recognition result of the object 8. With the robot hand 4 positioned above the object 8, the pad placement plane is, for example, parallel to the work-start table. After moving the robot hand 4 to the position above the object 8, the controller 120 outputs, to the hand control device 13 through the interface 123, positioning completion information indicating that the robot hand 4 has been positioned above the object 8.

In the hand control device 13 receiving the positioning completion information, the position specifier 136 specifies, in step s2, the position of each of the suction portions 41 based on the second object information in the storage 131. In step s3, the suction assembly controller 137 controls the drive 52 to cause each of the suction portions 41 to be at the position specified in step s2. Specifying the position of each of the suction portions 41 involves specifying the positional relationship between the suction portions 41. Thus, in this step, the suction assembly controller 137 can control the drive 52 to cause the suction portions 41 to have the positional relationship specified in step s2. The position of each of the suction portions 41 is thus set as appropriate for the object 8, allowing the suction portions 41 to properly suck the object 8. After the position of each of the suction portions 41 has been set, the suction assembly controller 137 outputs, to the robot control device 12 through the interface 132, setting completion information indicating that the position setting for each of the suction portions 41 is complete. A specific example of the method for specifying the position of each of the suction portions 41 will be described in detail later.

In the robot control device 12 receiving the setting completion information, step s4 is performed. In step s4, the controller 120 in the robot control device 12 controls the orientation of the arm 3 to move the robot hand 4 downward until the suction pads 410 come in contact with the object 8. In this step, the robot hand 4 moves in a direction perpendicular to the pad placement plane (also referred to as a placement-plane perpendicular direction). The controller 120 causes the suction pads 410 to come in proper contact with the object 8 to cause the robot hand 4 to properly suck the object 8. The controller 120 controls the orientation of the arm 3 to cause the opening edges 412 of the suction pads 410 to come in proper contact with the object 8. The controller 120 controls the orientation of the arm 3 to control, for example, the moving speed of the robot hand 4 in the placement-plane perpendicular direction. The controller 120 controls the moving speed of the robot hand 4 based on, for example, the detection results from the pressure sensors 55 included in the robot hand 4. The detection result from each of the pressure sensors 55 is input from the hand control device 13 into the robot control device 12. The moving speed of the robot hand 4 is controlled to control the position of each of the suction portions 41 in the robot hand 4 in the placement-plane perpendicular direction. The controller 120 identifies, for each of the suction pads 410, the contact pressure applied to the object 8 by the suction pad 410 based on the detection result from the corresponding pressure sensor 55. The controller 120 controls the moving speed of the robot hand 4 to cause each of the suction pads 410 to apply a proper contact pressure to the object 8. In other words, the controller 120 controls the position of the robot hand 4 in the placement-plane perpendicular direction to cause the contact pressure applied to the object 8 by each of the suction pads 410 to be within a predetermined range. Each of the suction pads 410 thus comes in proper contact with the object 8, or in other words, is properly pressed against the object 8. This allows each of the suction portions 41 in the robot hand 4 to properly suck the object 8. Upon the suction portions 41 coming in contact with the object 8, the controller 120 outputs, to the hand control device 13 through the interface 123, preparation completion information indicating completion of preparation to start suction.

Note that the controller 120 may cause each of the suction pads 410 to come in contact with the object 8 by controlling the moving speed of the robot hand 4 based on the detection results from the range sensors 57 included in the robot hand 4. The detection result from each of the range sensors 57 is input from the hand control device 13 into the robot control device 12. The controller 120 identifies, for each of the suction portions 41, the distance between the suction portion 41 and the object 8 based on the detection result from the corresponding range sensor 57. The controller 120 controls the moving speed of the robot hand 4 to properly adjust the distance between each of the suction portions 41 and the object 8. In other words, the controller 120 controls the position of the robot hand 4 in the placement-plane perpendicular direction to cause the distance between each of the suction portions 41 and the object 8 to be within a predetermined range. Each of the suction pads 410 thus comes in proper contact with the object 8, allowing each of the suction portions 41 in the robot hand 4 to properly suck the object 8.

The controller 120 may cause each of the suction pads 410 to come in contact with the object 8 by controlling the moving speed of the robot hand 4 based on the detection results from the pressure sensors 55 and the detection results from the range sensors 57. In this case, the controller 120 identifies, for each of the suction pads 410, the contact pressure applied to the object 8 by the suction pad 410 based on the detection result from the corresponding pressure sensor 55. The controller 120 also identifies, for each of the suction portions 41, the distance between the suction portion 41 and the object 8 based on the detection result from the corresponding range sensor 57. The controller 120 controls the moving speed of the robot hand 4 to properly adjust the contact pressure applied to the object 8 by the suction pad 410 in each of the suction portions 41 and to properly adjust the distance between each of the suction portions 41 and the object 8. This allows each of the suction pads 410 to properly come in contact with the object 8.

In the hand control device 13 receiving the preparation completion information, step s5 is performed. In step s5, the suction force specifier 135 specifies the suction force from the suction assembly 50. The suction force specifier 135 specifies the suction force from each of the suction portions 41 based on the first object information in the storage 131. Specifying the suction force is, in other words, specifying a set value for the suction force. In step s6, the suction assembly controller 137 controls the suction assembly 50 based on the suction force specification result from the suction force specifier 135. More specifically, the suction assembly controller 137 controls the negative pressure generator 51 in the suction assembly 50 based on the suction force specification result from the suction force specifier 135. The suction assembly controller 137 controls the negative pressure generator 51 to generate a negative pressure in the suction pad 410 in each of the suction portions 41 to cause the suction portion 41 to have the suction force (in other words, the set value) specified in step s5. This causes each of the suction portions 41 to suck the object 8 with the suction force specified by the suction force specifier 135. Upon the suction portions 41 starting sucking the object 8, the controller 130 outputs, to the robot control device 12 through the interface 132, suction start information indicating that suction has started. A specific example of the method for specifying the suction force from the suction assembly 50 will be described in detail later.

In the robot control device 12 receiving the suction start information, the controller 120 controls the arm 3 to cause the robot 2 to start transferring the object 8 in step s7. The controller 120 then outputs, to the hand control device 13 through the interface 123, object transfer start information indicating that transfer of the object 8 has started.

In the hand control device 13 receiving the object transfer start information, step s8 is performed. In step s8, the determiner 138 in the controller 130 determines the suction state of the suction assembly 50 sucking the object 8 based on the detection results from the sensor unit 59. A specific example of step s8 will be described in detail later.

When the determiner 138 determines that the suction state is appropriate in step s8, step s9 is performed. In step s9, the controller 130 determines whether the robot 2 has completed transferring the object 8. When the object 8 has been transferred to the work-target table, the controller 120 in the robot control device 12 outputs, to the hand control device 13 through the interface 123, transfer completion information indicating that transfer of the object 8 is complete. When the hand control device 13 has received the transfer completion information from the robot control device 12, the controller 130 determines that, in step s9, the robot 2 has completed transferring the object 8. In contrast, when the hand control device 13 has not received the transfer completion information from the robot control device 12, the controller 130 determines that the robot 2 has not completed transferring the object 8.

When the determination result is affirmative in step s9, step s10 is performed. In step s10, the controller 130 controls the negative pressure generator 51 to cause the suction portions 41 to release the suction of the object 8 using the negative pressure generator 51. This causes the object 8 to be placed on the work-target table. In contrast, when the determination result is negative in step s9, step s8 is performed again. In the subsequent steps, the hand control device 13 and the robot control device 12 operate in the same or similar manner.

When the determiner 138 determines that the suction state is inappropriate in step s8, step s11 is performed. In step s11, the controller 130 causes the interface 132 to output alert information indicating an alert. This causes the interface 132 as the notifier to provide the alert to outside the hand control device 13. The alert information is input into the robot control device 12. The alert information may include information indicating the suction state being inappropriate.

The robot control device 12 receiving the alert information performs a process corresponding to the alert from the hand control device 13. For example, in step s12, the controller 120 controls the arm 3 to cause the robot 2 to return the object 8 to its original position. In other words, the controller 120 causes the robot 2 to transfer the object 8 to the work-start table. When the object 8 has been transferred to the work-start table, the controller 120 outputs, to the hand control device 13 through the interface 123, information indicating that the object 8 has returned to the original position. In the hand control device 13 receiving this information, step s10 is performed to cause the suction structure 40 to release the suction of the object 8. This causes the object 8 to be placed on the work-start table.

Note that the alert information output from the hand control device 13 may be input into the terminal 14. In this case, the terminal 14 receiving the alert information may provide the alert to the user. For example, the terminal 14 may provide the alert to the user using the display included in the terminal 14. The terminal 14 may provide the alert to the user by outputting sound through the speaker included in the terminal 14. The notifier, such as the display, that provides notifications to the user may be included in the system control device 11. In this case, the notifier in the system control device 11 may receive the alert information and provide the alert to the user. The notifier that provides notifications to the user may be included in the hand control device 13. In this case, the notifier in the hand control device 13 may provide the alert to user. The notifier that provides notifications to the user may be included in the robot control device 12. In this case, the notifier in the robot control device 12 may receive the alert information and provide the alert to the user.

The controller 120 may cause the robot 2 to stop transferring the object 8 instead of performing step s12. In this case, the controller 120 may cause the robot 2 to return the object 8 to the original position in response to an instruction from the user. For example, in response to the alert from the terminal 14, the user inputs a reset instruction into the terminal 14 to return the object 8 to the original position. The reset instruction received by the terminal 14 is input into the robot control device 12. In the robot control device 12 receiving the reset instruction, the controller 120 controls the arm 3 to cause the robot 2 to return the object 8 to the original position. The hand control device 13 then performs step s10.

As described above, the hand control device 13 determines the suction force from the suction assembly 50 to suck the object 8 based on the first object information. Thus, the suction force from the suction assembly 50 to suck the object 8 can be changed as appropriate for the object 8, allowing the object 8 to be sucked properly and more stably. The first object information is updated based on the type of the object 8. This allows different types of objects 8 to be sucked properly using the same suction assembly 50.

The drive 52 can change the position of the suction portion 41 and thus allows the suction portion 41 to be at varied positions as appropriate for the object 8. This allows the object 8 to be sucked more stably. The position of the suction portion 41 is changed based on the type of the object 8. This allows different types of objects 8 to be sucked properly using the same suction assembly 50.

When the suction assembly 50 includes the multiple suction portions 41, the suction assembly 50 can change the positional relationship between the suction portions 41. This can change the positional relationship between the suction portions 41 as appropriate for the object 8, thus allowing the object 8 to be sucked more stably.

In the hand control device 13, the position of the suction portion 41 is specified based on the second object information. This can change the position of the suction portion 41 as appropriate for the object 8, thus allowing the object 8 to be sucked properly. The second object information is updated based on the type of the object 8. This allows different types of objects 8 to be sucked using the same suction assembly 50.

The hand control device 13 determines the suction state of the suction assembly 50 sucking the object 8 based on the detection result from at least one sensor. The suction state can thus be determined properly.

Further, the hand control device 13 provides the alert to outside the hand control device 13 based on the determination result of the suction state. Thus, any inappropriate suction state can be notified to the outside.

### Example Method for Specifying Position of Suction Portion

An operation of the position specifier 136 will now be described using an example with four suction pads 410 arranged in a square array as illustrated in FIGs. 5 to 8. Two suction pads 410 arranged diagonally in the suction structure 40 are hereafter referred to as a pad pair. The suction structure 40 includes two pad pairs. Note that the suction pads 410 may be arranged in a manner other than in this example.

### Case of Second Object Information Including Shape Information

The second object information may include the shape information. In this case, for example, the position specifier 136 identifies an upper surface (also referred to as an object upper surface) of the object 8 on the work-start table based on the shape information. The object upper surface refers to a visible area on the surface of the object 8 placed on the work-start table when the object 8 is viewed from above in the placement-plane perpendicular direction. The position specifier 136 then determines the center of the identified object upper surface. The position specifier 136 specifies the positions of the suction portions 41 to arrange each of the pad pairs symmetrically with respect to the center of the object upper surface when the suction portions 41 suck the object 8. The pad pair arranged symmetrically with respect to a position on the surface of the object 8 herein refers to the two suction pads 410 in the pad pair arranged symmetrically with respect to the position. Thus, in step s3, the positions of the suction portions 41 are set to arrange each of the pad pairs symmetrically with respect to the center of the object upper surface when the suction portions 41 suck the object 8. In other words, the positional relationship between the suction portions 41 is set to arrange each of the pad pairs symmetrically with respect to the center of the object upper surface when the suction portions 41 suck the object 8. Thus, when the robot hand 4 moves downward in the placement-plane perpendicular direction in step s4, the two diagonally arranged suction pads 410 in each of the pad pairs can suck the object upper surface at positions symmetric with respect to the center of the object upper surface. Each of the pad pairs may be designed to suck the object upper surface at positions as far away as possible from the center of the object upper surface. This allows the object 8 to be sucked by the suction portions 41 more stably.

FIG. 12 is a schematic diagram of examples of the suction pads 410 positioned as described above, with the two suction pads 410 in each of the pad pairs sucking the object 8 at positions symmetric with respect to a center 80a of an upper surface 80 of the object 8. FIG. 12 illustrates examples of the object 8 and the suction pads 410 as viewed from above the object 8 in the placement-plane perpendicular direction. As illustrated in the example in FIG. 12, four portions sucked by the four suction pads 410 may be at an equal distance from the center 80a of the object upper surface 80.

Note that, when the suction structure 40 includes a single suction portion 41, the position specifier 136 may specify the position of the suction portion 41 to cause the suction portion 41 to suck the center of the object upper surface.

### Case of Second Object Information Including Center-of-Gravity Position Information

In another example, the second object information may include the center-of-gravity position information indicating the object center-of-gravity position. A plan view of the object 8 and the suction pads 410, as viewed from above the object 8 in the placement-plane perpendicular direction, is herein referred to as a specific plan view. FIG. 12 illustrates the object 8 and the suction pads 410 in the specific plan view.

The position specifier 136 specifies the positions of the suction portions 41 to, for example, arrange each of the pad pairs symmetrically with respect to the object center-of-gravity position in the specific plan view when the suction portions 41 suck the object 8. The pad pair arranged symmetrically with respect to the object center-of-gravity position in the specific plan view herein refers to the two suction pads 410 in the pad pair arranged symmetrically with respect to the object center-of-gravity position in the specific plan view. Thus, in step s3, the positions of the suction portions 41 are set to arrange each of the pad pairs symmetrically with respect to the object center-of-gravity position in the specific plan view when the suction portions 41 suck the object 8. Thus, when the robot hand 4 moves downward in the placement-plane perpendicular direction in step s4, the two diagonally arranged suction pads 410 in each of the pad pairs can suck the object at positions symmetric with respect to the object center-of-gravity position in the specific plan view. This allows the suction portions 41 to suck the object 8 in a more balanced manner than in the example in FIG. 12. The object 8 sucked by the suction assembly 50 is less likely to tilt and can be stably sucked by the suction assembly 50.

FIG. 13 is a schematic diagram of examples of the suction pads 410 positioned as described above, with the two suction pads 410 in each of the pad pairs sucking the object at positions symmetric with respect to an object center-of-gravity position 80x in the specific plan view. FIG. 13 illustrates the object 8 and the suction pads 410 in the specific plan view. As illustrated in the example in FIG. 13, four portions sucked by the four suction pads 410 may be at an equal distance from the object center-of-gravity position 80x in the specific plan view.

Note that, when the suction structure 40 includes a single suction portion 41, the position specifier 136 may specify the position of the suction portion 41 to cause the suction portion 41 sucking the object 8 to align with the object center-of-gravity position in the specific plan view. Thus, when the robot hand 4 moves downward in the placement-plane perpendicular direction in step s4, the suction portion 41 can suck the surface of the object 8 at a position corresponding to the object center-of-gravity position in the specific plan view. Case of Second Object Information Including at Least One of First Area Information or Second Area Information

In another example, the second object information may include at least one of the first area information or the second area information. An area indicated by at least one of the first area information or the second area information on the surface of the object 8 is herein referred to as a specific area. The specific area includes at least one of the suction-inaccessible area or the suction-prohibited area. In other words, the specific area is an area on the surface of the object 8 that is not to be sucked by the suction assembly 50.

The position specifier 136 specifies the positions of the suction portions 41 to cause none of the suction portions 41 to face the specific area. Thus, in step s3, the positions of the suction portions 41 are set to cause none of the suction portions 41 to face the specific area. Thus, when the specific area includes the suction-inaccessible area, each of the suction portions 41 can properly suck an area outside the suction-inaccessible area on the surface of the object 8. When the specific area includes the suction-prohibited area, the suction assembly 50 is less likely to suck the suction-prohibited area on the object 8.

FIG. 14 is a schematic diagram of examples of the suction portions 41, with none of the suction portions 41 facing the suction-inaccessible area 800. When the suction portions 41 positioned as in FIG. 14 move downward in the placement-plane perpendicular direction (the vertical direction in FIG. 1) in step s4, the suction pads 410 can suck the area outside the suction-inaccessible area 800 on the surface of the object 8.

Note that, when the suction structure 40 includes a single suction portion 41, the position specifier 136 may specify the position of the suction portion 41 to cause the suction portion 41 not to face the specific area.

### Case of Second Object Information Including Shape Information and Center-of-Gravity Position Information

In another example, the second object information may include the shape information and the center-of-gravity position information. In this case, for example, the position specifier 136 identifies the object upper surface 80 based on the shape information. The position specifier 136 specifies the positions of the suction portions 41 to arrange each of the pad pairs symmetrically with respect to the object center-of-gravity position in the specific plan view when the suction portions 41 suck the object 8. In this case, the position specifier 136 specifies the positions of the suction portions 41 to cause the suction portions 41 to suck portions of the identified object upper surface 80 that are as close as possible to the outer edge of the object upper surface 80. This allows the object 8 to be sucked by the suction portions 41 more stably. For example, the position specifier 136 may specify the positions of the suction portions 41 to cause the suction portions 41 to suck portions of the identified object upper surface 80 adjacent to its four corners.

### Case of Second Object Information Including Shape Information and at Least One of First Area Information or Second Area Information

In another example, the second object information may include the shape information and at least one of the first area information or the second area information. In this case, for example, the position specifier 136 identifies the object upper surface 80 based on the shape information. The position specifier 136 then identifies, as a suction-accessible area, an area on the object upper surface 80 excluding the specific area. The position specifier 136 then determines the center of the suction-accessible area. The position specifier 136 specifies the positions of the suction portions 41 to arrange each of the pad pairs symmetrically with respect to the center of the suction-accessible area when the suction portions 41 suck the object 8. Thus, in step s3, the positions of the suction portions 41 are set to arrange each of the pad pairs symmetrically with respect to the center of the suction-accessible area when the suction portions 41 suck the object 8. Thus, when the robot hand 4 moves downward in the placement-plane perpendicular direction in step s4, the two suction pads 410 in each of the pad pairs can suck the suction-accessible area in the object upper surface at positions symmetric with respect to the center of the suction-accessible area. Each of the pad pairs may be designed to suck the suction-accessible area at positions as far away as possible from the center of the suction-accessible area.

Note that, when the suction structure 40 includes a single suction portion 41, the position specifier 136 may specify the position of the suction portion 41 to cause the suction portion 41 to suck the center of the suction-accessible area.

### Case of Second Object Information Including Center-of-Gravity Position Information and at Least One of First Area Information or Second Area Information

In another example, the second object information may include the center-of-gravity position information and at least one of the first area information or the second area information. In this case, the position specifier 136 specifies the positions of the suction portions 41 to cause none of the suction portions 41 to face the specific area. In this case, the position specifier 136 specifies the positions of the suction portions 41 to, for example, arrange each of the pad pairs symmetrically with respect to the object center-of-gravity position in the specific plan view when the suction portions 41 suck the object 8. When such positions are difficult to achieve, the position specifier 136 specifies the positions of the suction portions 41 to cause each of the pad pairs to be as symmetric as possible with respect to the object center-of-gravity position in the specific plan view when the suction portions 41 suck the object 8. This allows the suction portions 41 to suck the surface of the object 8 in a balanced manner without sucking the specific area on the surface.

Note that, when the suction structure 40 includes a single suction portion 41, the position specifier 136 may specify the position of the suction portion 41 to cause the suction portion 41 not to face the specific area. In this case, the position specifier 136 specifies the position of the suction portion 41 to, for example, cause the suction portion 41 sucking the object 8 to align with the object center-of-gravity position in the specific plan view. When such a position is difficult to achieve, the position specifier 136 specifies the position of the suction portion 41 to cause the suction portion 41 to be as close as possible to the object center-of-gravity position in the specific plan view when the suction portion 41 sucks the object 8.

### Case of Second Object Information Including Shape Information, Center-of-Gravity Position Information, and at Least One of First Area Information or Second Area Information

In another example, the second object information may include the shape information, the center-of-gravity position information, and at least one of the first area information or the second area information. In this case, for example, the position specifier 136 identifies the object upper surface 80 based on the shape information. The position specifier 136 then identifies, as the suction-accessible area, an area on the object upper surface 80 excluding the specific area. The position specifier 136 then specifies the positions of the suction portions 41 to cause the suction portions 41 to suck the suction-accessible area when the robot hand 4 moves downward in step s4. In this case, the position specifier 136 specifies the positions of the suction portions 41 to, for example, arrange each of the pad pairs symmetrically with respect to the object center-of-gravity position in the specific plan view when the suction portions 41 suck the object 8. When such positions are difficult to achieve, the position specifier 136 specifies the positions of the suction portions 41 to cause each of the pad pairs to be as symmetric as possible with respect to the object center-of-gravity position in the specific plan view when the suction portions 41 suck the object 8. This allows the suction portions 41 to reliably suck the suction-accessible area on the object 8 in a balanced manner.

### Example Method for Specifying Suction Force from Suction Assembly

### Case of First Object Information Including Weight Information

The first object information may include the weight information indicating the object weight. In this case, the suction force specifier 135 specifies, for the suction force from each of the suction portions 41, a value corresponding to the object weight indicated by the weight information. More specifically, the suction force specifier 135 specifies, for the suction force from each of the suction portions 41, a value that allows the suction assembly 50 to properly suck the object 8 having the weight indicated by the weight information. Thus, each of the suction portions 41 has a greater suction force for a greater object weight indicated by the weight information. The suction force from the suction portion 41 specified based on the object weight alone as in this example is hereafter referred to as a weight-based suction force. Case of First Object Information Including at Least One of First Area Information or Second Area Information

In another example, the first object information may include at least one of the first area information or the second area information. In this case, for example, the suction force specifier 135 specifies a higher set value for the suction force from each of the suction portions 41 for a larger specific area indicated by at least one of the first area information or the second area information included in the first object information. The surface of the object 8 including a larger specific area includes a smaller area that can be sucked by the suction assembly 50. The object 8 with a larger specific area may thus be sucked unstably by the suction assembly 50. In this example, for a larger specific area, a higher set value is specified for the suction force from each of the suction portions 41. This allows the object 8 to be sucked more stably.

### Case of First Object Information Including Tilt Limitation Information

In another example, the first object information may include the tilt limitation information. In this case, for example, the suction force specifier 135 specifies a higher set value for the suction force from each of the suction portions 41 for a less tilt tolerance indicated by the tilt limitation information. This allows the object 8 to be less likely to tilt while being held and transferred by the robot hand 4 with a less tilt tolerance indicated by the tilt limitation information. This allows the tilt of the object 8 to satisfy the tilt tolerance.

### Case of First Object Information Including Weight Information and at Least One of First Area Information or Second Area Information

In another example, the first object information may include the weight information and at least one of the first area information or the second area information. In this case, for example, the suction force specifier 135 specifies the weight-based suction force based on the weight information. For a larger specific area, the suction force specifier 135 specifies a higher set value for the suction force from each of the suction portions 41 relative to the weight-based suction force. For example, the suction force specifier 135 specifies, for the suction force from each of the suction portions 41, a set value that is L times the weight-based suction force (L is a real number greater than 1). The value L is set higher for a larger specific area. This allows the object 8 to be sucked more stably.

### Case of First Object Information Including at Least One of First Area Information or Second Area Information and Tilt Limitation Information

In another example, the first object information may include at least one of the first area information or the second area information and the tilt limitation information. In this case, for example, the suction force specifier 135 specifies the suction force from each of the suction portions 41 based on the size of the specific area and the level of tilt tolerance. For example, the suction force specifier 135 specifies the suction force from each of the suction portions 41 using an evaluation value (also referred to as a first evaluation value) for the size of the specific area and an evaluation value (also referred to as a second evaluation value) for the level of tilt tolerance. The first evaluation value is, for example, a real number greater than zero and is greater for a larger specific area. The second evaluation value is, for example, a real number greater than zero and is greater for a greater tilt tolerance. For example, the suction force specifier 135 specifies a higher set value for the suction force from each of the suction portions 41 for a higher value resulting from dividing the first evaluation value by the second evaluation value. Thus, the set value for the suction force from the suction portion 41 corresponds to both the size of the specific area and the level of tilt tolerance. For a larger specific area and a less tilt tolerance, for example, a higher set value is specified for the suction force from the suction portion 41. This allows the object 8 to be sucked more stably. Case of First Object Information Including Weight Information and Tilt Limitation Information

In another example, the first object information may include the weight information and the tilt limitation information. In this case, for example, the suction force specifier 135 determines the weight-based suction force based on the weight information. For a less tilt tolerance, the suction force specifier 135 specifies a higher set value for the suction force from each of the suction portions 41 relative to the weight-based suction force. For example, the suction force specifier 135 specifies, for the suction force from each of the suction portions 41, a set value that is M times the weight-based suction force (M is a real number greater than 1). The value M is set higher for a less tilt tolerance. This allows the object 8 to be sucked more stably.

### Case of First Object Information Including Weight Information, at Least One of First Area Information or Second Area Information, and Tilt Limitation Information

In another example, the first object information may include the weight information, at least one of the first area information or the second area information, and the tilt limitation information. In this case, for example, the suction force specifier 135 determines the weight-based suction force based on the weight information. For example, the suction force specifier 135 specifies a higher set value for the suction force from each of the suction portions 41, relative to the weight-based suction force, for a higher value resulting from dividing the first evaluation value by the second evaluation value described above. For example, the suction force specifier 135 specifies, for the suction force from each of the suction portions 41, a set value that is N times the weight-based suction force (N is a real number greater than 1). The value N is set higher for a higher value resulting from the above division. This allows the object 8 to be sucked more stably.

Note that the first object information may include the shape information in place of the weight information. In this case, for example, the suction force specifier 135 identifies the size (e.g., the volume) of the object 8 based on the shape information. The suction force specifier 135 specifies a higher set value for the suction force from each of the suction portions 41 for a larger object 8. With the above example method for specifying the suction force, the suction force specifier 135 may use the suction force from the suction portion 41 specified based on the shape information alone, instead of using the weight-based suction force. The suction force from one or more of the suction portions 41 may be fixed rather than being controllable. In other words, the suction force from one or more of the suction portions 41 may be fixed rather than being specified based on the first object information.

The position of each of the suction portions 41 may be fixed rather than being controllable. In other words, steps s2 and s3 may be eliminated. In this case, the drive 52 may be eliminated. The body 46 of the outer case 45 may include no groove 460. When the position of each of the suction portions 41 is not controllable, the positional relationship between the suction portions 41 is preset based on the shape of the object 8.

When the position of each of the suction portions 41 is not controllable, the robot control device 12 may control the arm 3 based on the second object information to position the robot hand 4 above the object 8 in step s1. For example, the second object information may include the shape information. In this case, for example, the controller 120 in the robot control device 12 determines the center of the object upper surface based on the shape information. The controller 120 controls the position and the orientation of the arm 3 to position the robot hand 4 to arrange each of the pad pairs in the suction structure 40 symmetrically with respect to the center of the object upper surface when each of the suction portions 41 in the robot hand 4 moving downward comes in contact with the object 8 in step s4.

In another example, the second object information may include the center-of-gravity position information. In this case, for example, the controller 120 controls the position and the orientation of the arm 3 to position the robot hand 4 to arrange each of the pad pairs symmetrically with respect to the object center-of-gravity position in the specific plan view when each of the suction portions 41 in the robot hand 4 moving downward comes in contact with the object 8 in step s4.

In another example, the second object information may include at least one of the first area information or the second area information. In this case, the controller 120 controls the position and the orientation of the arm 3 to position the robot hand 4 to cause none of the suction portions 41 above the object 8 to face the specific area indicated by at least one of the first area information or the second area information.

### Example Method for Determining Suction State

When the suction portions 41 suck the object 8 improperly, the negative pressure in the suction pad 410 in each of the suction portions 41 may deviate from its proper value. The determiner 138 may thus determine the suction state based on, for example, the detection results from the negative pressure sensors 54. In this case, the determiner 138 identifies, for example, the negative pressure in each of the suction pads 410 based on the detection result from the corresponding negative pressure sensor 54. When the identified negative pressures are each within a predetermined range, the determiner 138 determines that the suction state is appropriate. In contrast, when one or more of the identified negative pressures are out of the predetermined range, the determiner 138 determines that the suction state is inappropriate. The determination result of the suction state based on the detection results from the negative pressure sensors 54 is hereafter referred to as a first determination result.

When the suction portions 41 suck the object 8 improperly, the contact pressure applied to the object 8 by the suction pad 410 in each of the suction portions 41 may deviate from its proper value. The determiner 138 may thus determine the suction state based on, for example, the detection results from the pressure sensors 55. In this case, the determiner 138 identifies, for each of the suction pads 410, the contact pressure applied to the object 8 by the suction pad 410 based on, for example, the detection result from the corresponding pressure sensor 55. When the identified contact pressures are each within the predetermined range, the determiner 138 determines that the suction state is appropriate. In contrast, when one or more of the identified contact pressures are out of the predetermined range, the determiner 138 determines that the suction state is inappropriate. The determination result of the suction state based on the detection results from the pressure sensors 55 is hereafter referred to as a second determination result.

When the suction portions 41 suck the object 8 improperly, the distance between each of the suction portions 41 and the object 8 may deviate from its proper value. The determiner 138 may thus determine the suction state based on, for example, the detection results from the range sensors 57. In this case, the determiner 138 identifies, for each of the suction portions 41, the distance between the suction portion 41 and the object 8 based on, for example, the detection result from the corresponding range sensor 57. When the identified distances are each within the predetermined range, the determiner 138 determines that the suction state is appropriate. In contrast, when one or more of the identified distances are out of the predetermined range, the determiner 138 determines that the suction state is inappropriate. The determination result of the suction state based on the detection results from the range sensors 57 is hereafter referred to as a third determination result.

The determiner 138 may determine the suction state based on the detection result from the force sensor 56. In an example, the robot hand 4 produces substantially no moment about the x-axis and the y-axis when the suction portions 41 suck the object 8 properly. In this case, the determiner 138 identifies the moment about the x-axis applied to the robot hand 4 and the moment about the y-axis applied to the robot hand 4 based on the detection result from the force sensor 56. When each of the two identified moments is less than or equal to a threshold, the determiner 138 determines that the suction state is appropriate. In contrast, when one or more of the two identified moments are greater than the threshold, the determiner 138 determines that the suction state is inappropriate. Thus, the determiner 138 can determine that the suction state is inappropriate when the object 8 sucked by the robot hand 4 tilts. The determination result of the suction state based on the detection result from the force sensor 56 is hereafter referred to as a fourth determination result.

The determiner 138 may finally determine the suction state based on at least two determination results selected from the group consisting of the first determination result, the second determination result, the third determination result, and the fourth determination result. The first determination result, the second determination result, the third determination result, and the fourth determination result are respectively referred to as a first provisional determination result, a second provisional determination result, a third provisional determination result, and a fourth provisional determination result. The determiner 138 may finally determine the suction state based on at least two provisional determination results selected from the group consisting of the first provisional determination result, the second provisional determination result, the third provisional determination result, and the fourth provisional determination result. For example, when the at least two provisional determination results each indicate the suction state being appropriate, the determiner 138 finally determines that the suction state is appropriate as the determination result in step s8. In contrast, when one or more of the at least two provisional determination results indicate the suction state being inappropriate, the determiner 138 finally determines that the suction state is inappropriate as the determination result in step s8.

As described above, the suction state of the suction assembly 50 sucking the object 8 is determined based on the detection result from at least one sensor. The suction state can thus be determined properly.

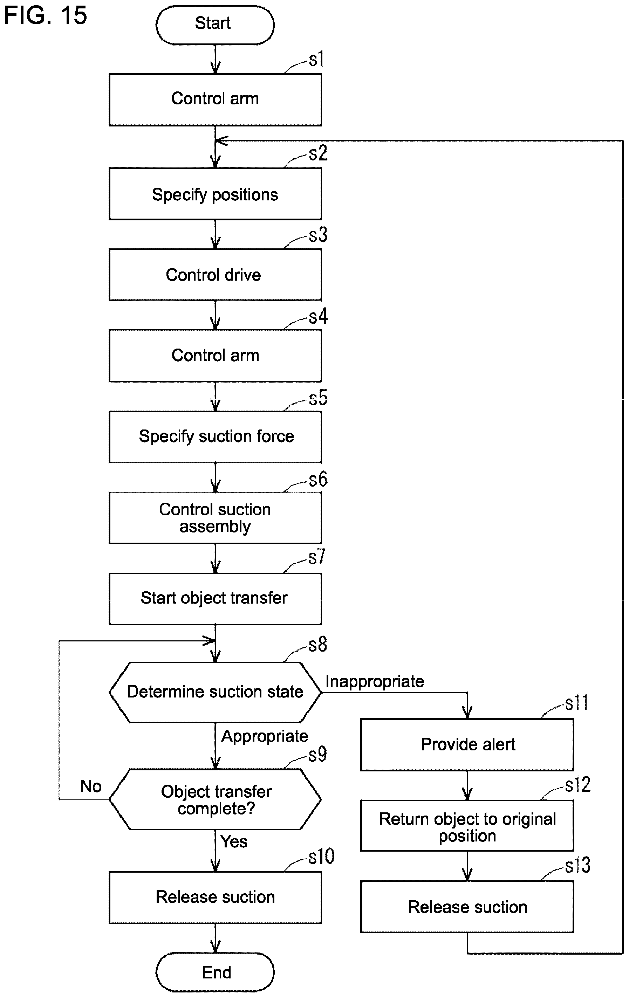

Note that the position specifier 136 may re-specify the positions of the suction portions 41 based on the determination result of the suction state from the determiner 138. The suction force specifier 135 may re-specify the suction force from the suction assembly 50 based on the determination result of the suction state from the determiner 138. FIG. 15 is a flowchart of example operations of the hand control device 13 and the robot control device 12 in this case.

In the example in FIG. 15, step s13 follows steps s11 and s12 in response to the suction state being determined to be inappropriate in step s8. In step s13, the controller 130 controls the negative pressure generator 51 to cause the suction portions 41 to release the suction of the object 8 using the negative pressure generator 51, as in step s10. This causes the object 8 to be placed on the work-start table. Step s2 is then performed again. In step s2, the position specifier 136 re-specifies the positions of the suction portions 41. For example, the position specifier 136 re-specifies the positions of the suction portions 41 to cause all the suction portions 41 to be located more inward. The position specifier 136 may also re-specify the positions of the suction portions 41 to cause all the suction portions 41 to be located more outward. When the suction portions 41 are located in an outer portion of the bottom surface 46a, the position specifier 136 may re-specify, in step s2, the positions of the suction portions 41 to cause all the suction portions 41 to be located more inward. In contrast, when the suction portions 41 are located in an inner portion of the bottom surface 46a, the position specifier 136 may re-specify, in step s2, the positions of the suction portions 41 to cause all the suction portions 41 to be located more outward. After the positions of the suction portions 41 are re-specified in step s2, step s3 is performed. The positions of the suction portions 41 are thus changed to the positions re-specified in step s2. Step s4 is then performed again.

Following step s4, step s5 is performed again to re-specify the suction force from the suction assembly 50. In step s5, for example, the suction force specifier 135 increases the set value for the suction force from each of the suction portions 41. Step s6 is then performed to set the suction force from each of the suction portions 41 to the set value re-specified in step s5. Thus, the suction force from the suction portion 41 is changed based on the determination result of the suction state from the determiner 138. In the subsequent steps, the hand control device 13 and the robot control device 12 operate in the same or similar manner.

As described above, the position of the suction portion 41 may be re-specified based on the determination result of the suction state from the determiner 138. This can re-specify the position of the suction portion 41 when its suction state is inappropriate. This improves the suction state of the suction assembly 50 sucking the object 8.

The suction force from the suction assembly 50 may be re-specified based on the determination result of the suction state from the determiner 138. This can re-specify the suction force from the suction assembly 50 when its suction state is inappropriate. This improves the suction state of the suction assembly 50 sucking the object 8.

In the example in FIG. 15, both the position of the suction portion 41 and the suction force from the suction assembly 50 are re-specified based on the determination result of the suction state from the determiner 138. However, either the position of the suction portion 41 or the suction force from the suction assembly 50 may be re-specified. When the position of the suction portion 41 alone is re-specified without the suction force from the suction assembly 50 being re-specified, step s13 is followed by step s6 without step s5 being performed. In step s6, the suction assembly 50 sucks the object 8 with the suction force from each of the suction portions 41 unchanged. In contrast, when the suction force from the suction assembly 50 alone is re-specified without the position of the suction portion 41 being re-specified, step s13 is followed by step s4 and the subsequent steps without step s2 or s3 being performed. Step s12 may also be followed by step s5 and the subsequent steps without step s13, s2, s3, or s4 being performed. In this case, step s5 and the subsequent steps are performed while the suction assembly 50 is sucking the object 8. Step s11 may also be followed by step s5 without step s12, s13, s2, s3, or s4 being performed. In this case, step s11 is followed by steps s5, s6, s8, and the subsequent steps without step s7 being performed.

In step s5, the suction force may be set individually for each of the suction portions 41. For example, the first object information may include the shape information indicating the shape of the object 8 with a nonuniform thickness. In this case, for example, the suction force specifier 135 identifies, based on the shape information, a thicker portion of the object 8 with a relatively large thickness and a thinner portion of the object 8 with a relatively small thickness in step s5. The suction force specifier 135 specifies a relatively high set value for the suction force from one of the suction portions 41 that sucks the thicker portion of the object 8, and specifies a relatively low set value for the suction force from one of the suction portions 41 that sucks the thinner portion of the object 8. In this manner, the suction force is set individually for each of the suction portions 41 based on the difference in thickness in the single object 8.

In another example, the first object information may include the center-of-gravity position information. In this case, the suction force specifier 135 determines, for each of the suction portions 41, the distance between a suction position at which the suction portion 41 sucks the object 8 and the object center-of-gravity position indicated by the center-of-gravity position information in the specific plan view. The suction force specifier 135 specifies a higher set value for the suction force from the suction portion 41 for the determined distance being shorter. More specifically, the suction force specifier 135 specifies a higher set value for the suction force from the suction portion 41 that sucks the object 8 at a suction position closer to the object center-of-gravity position in the specific plan view. In this manner, the suction force is set individually for each of the suction portions 41 based on the distance between the suction position and the center-of-gravity position of the object 8 in the specific plan view.

In the example in FIG. 15, the suction force specifier 135 may re-specify the suction force from the suction assembly 50 based on the center-of-gravity position information included in the first object information in step s5 after the suction state is determined to be inappropriate in step s8. In this case, for example, the suction force specifier 135 determines, for each of the suction portions 41, the distance between the suction position at which the suction portion 41 sucks the object 8 and the object center-of-gravity position indicated by the center-of-gravity position information in the specific plan view. The suction force specifier 135 increases the set value for the suction force from the suction portion 41 for the determined distance being less than or equal to a threshold. In this manner, the suction force is set higher for a suction portion 41 of the suction portions 41 with its suction position closer to the object center-of-gravity position in the specific plan view.

In the example in FIG. 15, the suction force specifier 135 may re-specify the suction force from the suction portion 41 based on information from the sensor unit 59 that varies based on the suction state of the suction portion 41 sucking the object 8. In the example in FIG. 15, in step s5 following step s13, for example, the suction force specifier 135 may re-specify, based on the detection result from the negative pressure sensor 54, the suction force from the suction portion 41 corresponding to the negative pressure sensor 54. The detection result from the negative pressure sensor 54 is the information that varies based on the suction state of the suction portion 41 sucking the object 8 corresponding to the negative pressure sensor 54. When, for example, the negative pressure detected by the negative pressure sensor 54 is less than a predetermined range (in other words, an appropriate range), the suction force specifier 135 decreases the set value for the suction force from the suction portion 41 corresponding to the negative pressure sensor 54. In contrast, when the negative pressure detected by the negative pressure sensor 54 is greater than the predetermined range (in other words, when the negative pressure detected by the negative pressure sensor 54 is insufficient), the suction force specifier 135 increases the set value for the suction force from the suction portion 41 corresponding to the negative pressure sensor 54.

In step s5 following step s13, the suction force specifier 135 may re-specify, based on the detection result from the pressure sensor 55, the suction force from the suction portion 41 corresponding to the pressure sensor 55. The detection result from the pressure sensor 55 is the information that varies based on the suction state of the suction portion 41 sucking the object 8 corresponding to the pressure sensor 55. When, for example, the contact pressure detected by the pressure sensor 55 is greater than a predetermined range, the suction force specifier 135 decreases the set value for the suction portion 41 corresponding to the pressure sensor 55. In contrast, when the contact pressure detected by the pressure sensor 55 is less than the predetermined range, the suction force specifier 135 increases the set value for the suction portion 41 corresponding to the pressure sensor 55.

In step s5 following step s13, the suction force specifier 135 may re-specify, based on the detection result from the range sensor 57, the suction force from the suction portion 41 corresponding to the range sensor 57. The detection result from the range sensor 57 is the information that varies based on the suction state of the suction portion 41 sucking the object 8 corresponding to the range sensor 57. When, for example, the distance detected by the range sensor 57 is greater than a predetermined range, the suction force specifier 135 increases the set value for the suction portion 41 corresponding to the range sensor 57. In contrast, when the distance detected by the range sensor 57 is less than the predetermined range, the suction force specifier 135 decreases the set value for the suction portion 41 corresponding to the range sensor 57.

### Other Examples of Suction Assembly

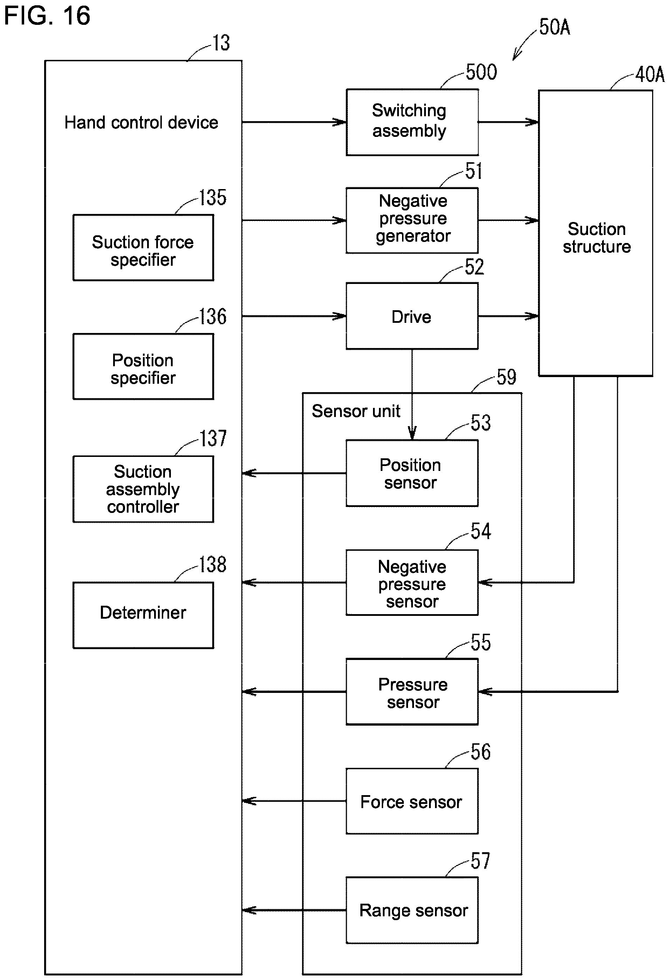

The robot control system 10 may include a suction assembly 50A illustrated in FIG. 16, in place of the suction assembly 50. The suction assembly 50A includes, for example, the negative pressure generator 51 and the drive 52 described above, a suction structure 40A that sucks the object 8, and a switching assembly 500.

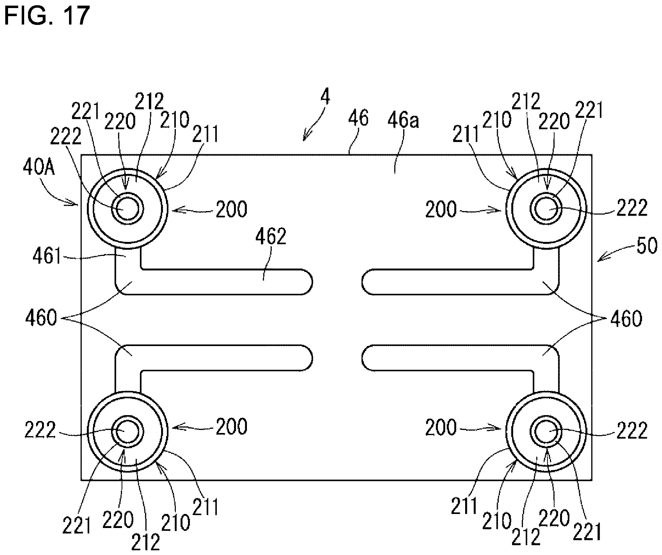

FIG. 17 is a schematic diagram of an example of the robot hand 4 including the suction assembly 50A, as viewed from the bottom surface 46a. As illustrated in FIG. 17, the suction structure 40A corresponds to the above suction structure 40 but includes suction portions 200 in place of the suction portions 41. The suction structure 40A includes, for example, four suction portions 200. Each of the suction portions 200 includes, for example, multiple suction portions that can suck the object 8. Each of the suction portions 200 is, for example, movable along the groove 460, in the same manner as or in a similar manner to the suction portion 41. The drive 52 can move each of the suction portions 200. Note that the position of at least one of the suction portions 200 may be fixed, in the same manner as or in a similar manner to the suction portion 41. The suction assembly 50A may include one, two, three, or five or more suction portions 200.

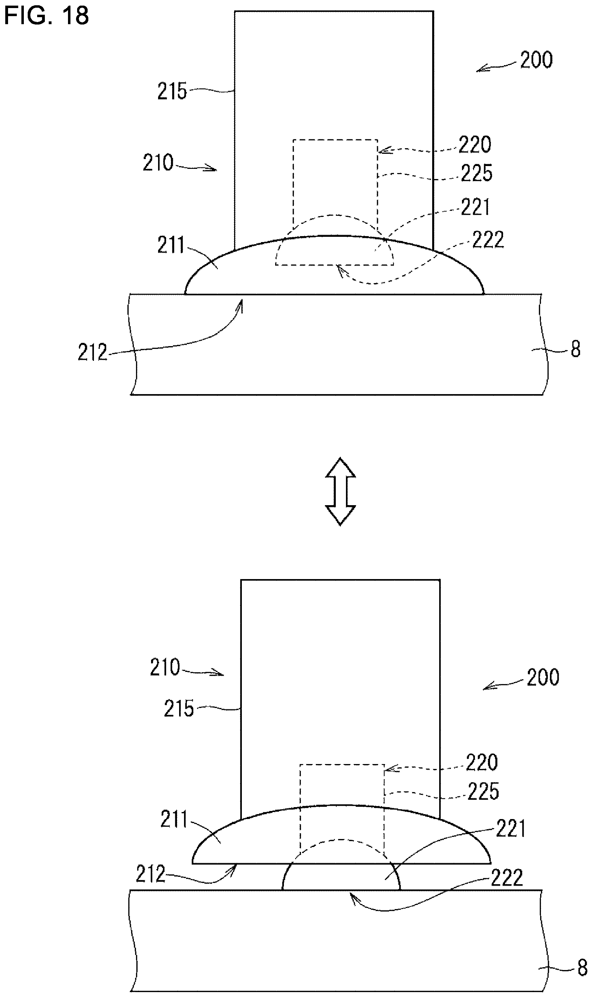

FIG. 18 is a schematic diagram of the suction portion 200, illustrating its example structure. As illustrated in FIGs. 17 and 18, each of the suction portions 200 includes, for example, a first suction portion 210 that can suck the object 8 and a second suction portion 220 that can suck the object 8. The suction assembly 50A can switch, for each of the suction portions 200, between a first state in which the first suction portion 210 sucks the object 8 and a second state in which the second suction portion 220 sucks the object 8. FIG. 18 illustrates an example of the suction portion 200 in the first state in an upper part of the figure, and an example of the suction portion 200 in the second state in a lower part of the figure.

The first suction portion 210 includes a first suction pad 211 at an end. The first suction pad 211 is hollow and includes a first suction opening 212. The second suction portion 220 includes a second suction pad 221 at an end. The second suction pad 221 is hollow and includes a second suction opening 222. The first suction opening 212 is larger than the second suction opening 222. In other words, the first suction opening 212 has a larger opening area than the second suction opening 222. Each of the first suction opening 212 and the second suction opening 222 is, for example, circular. The first suction opening 212 has a larger diameter than the second suction opening 222. Each of the first suction pad 211 and the second suction pad 221 is, for example, an elastic member made of synthetic rubber. Each of the first suction pad 211 and the second suction pad 221 may be a flat pad or a bellows pad. One of the first suction pad 211 or the second suction pad 221 may be a flat pad, and the other of the first suction pad 211 or the second suction pad 221 may be a bellows pad.

The suction portions in the suction portion 200 have a multi-size nested structure. More specifically, the first suction portion 210 and the second suction portion 220 have a multi-size nested structure in which the second suction portion 220 is located inside the first suction portion 210 and can protrude from the first suction portion 210. The second suction portion 220 is movable relative to the first suction portion 210 in the first suction portion 210 to cause the second suction opening 222 to relatively move in and out of the first suction portion 210. The second suction portion 220 has a retracted state and a protruding state. In the retracted state, the second suction portion 220 is entirely located inside the first suction portion 210. In the protruding state, the second suction opening 222 in the second suction pad 221 is located outside the first suction opening 212 in the first suction pad 211. FIG. 18 illustrates the second suction portion 220 in the retracted state in the upper part, and the second suction portion 220 in the protruding state in the lower part. In the second suction portion 220 in the protruding state, for example, the second suction pad 221 is located partially outside the first suction portion 210. The suction portion 200 including the suction portions with the multi-size nested structure may be hereafter referred to as a multi-size suction portion 200.

As illustrated in the upper part of FIG. 18, when the first suction portion 210 sucks the object 8, or in other words, when the multi-size suction portion 200 is in the first state, the first suction opening 212 in the first suction pad 211 is covered with the object 8 with an opening edge of the first suction opening 212 in contact with the object 8. The pressure in the first suction pad 211 is reduced by the negative pressure generator 51 to cause the opening edge of the first suction pad 211 to be in tight contact with the object 8. The first suction pad 211 thus sucks the object 8. The second suction portion 220 can suck the object 8 in the same or similar manner. When the first suction pad 211 and the second suction pad 221 have the same negative pressure, the first suction pad 211 with the larger first suction opening 212 has a greater suction force than the second suction pad 221 with the smaller second suction opening 222.

The first suction pad 211 may be hereafter referred to as a larger pad 211. The second suction pad 221 may be referred to as a smaller pad 221. The first suction portion 210 may be referred to as a larger-pad suction portion 210. The second suction portion 220 may be referred to as a smaller-pad suction portion 220. The first state may be referred to as a larger pad in-use state. The second state may be referred to as a smaller pad in-use state. One of the larger-pad suction portion 210 or the smaller-pad suction portion 220 that is selected to suck the object 8 may be referred to as an in-use suction portion. The suction pad in the in-use suction portion may be referred to as an in-use pad. For example, when the multi-size suction portion 200 is in the larger pad in-use state, the in-use suction portion is the larger-pad suction portion 210 and the in-use pad is the larger pad 211.

When each of the multi-size suction portions 200 is in the larger pad in-use state, the larger pads 211 are located in the same plane, in the same manner as or in a similar manner to the suction pads 410. In the same or similar manner, when each of the multi-size suction portions 200 is in the smaller pad in-use state, the smaller pads 221 are located in the same plane. The in-use pads in the multi-size suction portions 200 are located in the same plane.

In the suction assembly 50A described below, a pad placement plane refers to an imaginary placement plane in which the in-use pads are located. The pad placement plane in the suction assembly 50A is, for example, parallel to the bottom surface 46a. In the suction assembly 50A described below, a placement-plane perpendicular direction refers to the direction perpendicular to the imaginary placement plane in which the in-use pads are located. In the suction assembly 50A described below, a specific plan view refers to a plan view of the object 8 and the in-use pads as viewed from above the object 8 in the placement-plane perpendicular direction.

The switching assembly 500 can switch each of the multi-size suction portions 200 between the larger pad in-use state and the smaller pad in-use state. In other words, the switching assembly 500 can set each of the multi-size suction portions 200 to the larger pad in-use state or the smaller pad in-use state. The switching assembly 500 can set each of the second suction portions 220 to the retracted state or the protruding state. The switching assembly 500 may set the state of each of the multi-size suction portions 200 individually. In this case, the switching assembly 500 can set one of the multi-size suction portion 200 to the larger pad in-use state, and can set another one of the multi-size suction portion 200 to the smaller pad in-use state.

The switching assembly 500 includes multiple switchers 501 corresponding to the respective multi-size suction portions 200. Each of the switchers 501 can switch the corresponding multi-size suction portion 200 between the larger pad in-use state and the smaller pad in-use state.

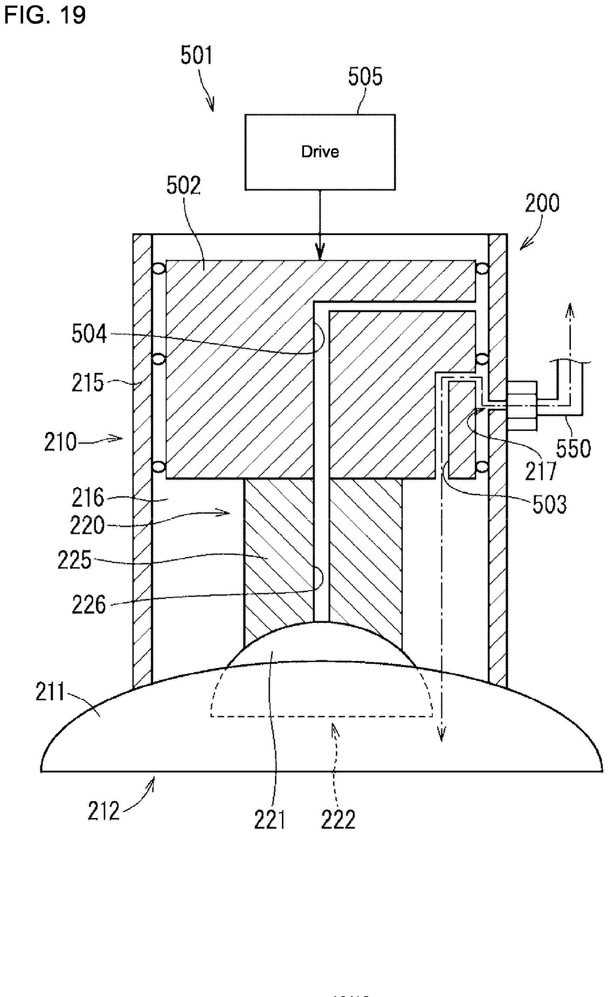

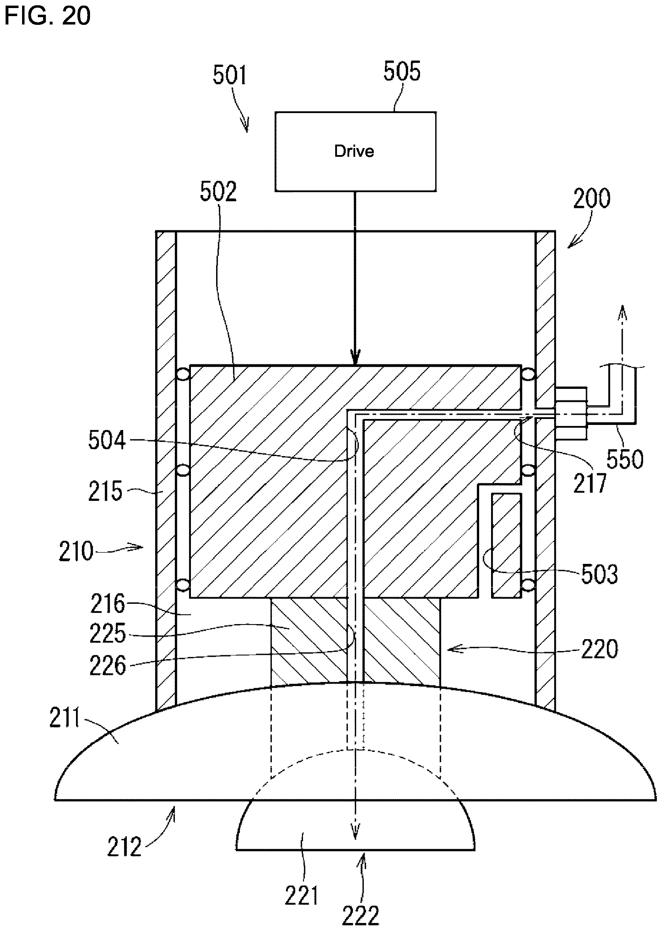

FIGs. 19 and 20 are each a schematic diagram of one of the switchers 501 and the corresponding multi-size suction portion 200, illustrating their example structures. FIG. 19 illustrates the multi-size suction portion 200 in the larger pad in-use state. FIG. 20 illustrates the multi-size suction portion 200 in the smaller pad in-use state.

As illustrated in FIGs. 19 and 20, the larger-pad suction portion 210 includes a first cylinder 215 that is hollow. The larger pad 211 is located at an end of the first cylinder 215. The first cylinder 215 includes a hollow 216 as a first channel 216 that allows air to flow. The first channel 216 is continuous with a hollow inside the larger pad 211.

The smaller-pad suction portion 220 includes a second cylinder 225 including a second channel 226 that allows air to flow. The smaller pad 221 is located at an end of the second cylinder 225. The second channel 226 is continuous with a hollow inside the smaller pad 221. The second cylinder 225 is located in the first channel 216 in the first cylinder 215.

Multiple pipes 550 that allow air to flow extend from the negative pressure generator 51 to the respective first cylinders 215 in the multi-size suction portions 200. Each of the first cylinders 215 includes a through-hole 217 in its peripheral wall. The through-hole 217 is continuous with a channel in the pipe 550 extending from the negative pressure generator 51 to the first cylinder 215.

When the channel in the pipe 550 extending from the negative pressure generator 51 is connected to the first channel 216 in the first cylinder 215 in the larger-pad suction portion 210, the negative pressure generator 51 can reduce the pressure in the larger pad 211 to generate a negative pressure in the larger pad 211. In contrast, when the channel in the pipe 550 is connected to the second channel 226 in the second cylinder 225 in the smaller-pad suction portion 220, the negative pressure generator 51 can reduce the pressure in the smaller pad 221 to generate a negative pressure in the smaller pad 221.

The switcher 501 includes, for example, a channel switching cylinder 502 and a drive 505 that can move the channel switching cylinder 502. The channel switching cylinder 502 is located in the first channel 216 in the first cylinder 215. The channel switching cylinder 502 is driven by the drive 505 to move in the first channel 216 in its length direction (the vertical direction in FIGs. 19 and 20). The channel switching cylinder 502 is movable in the placement-plane perpendicular direction. The smaller-pad suction portion 220 is fixed to the channel switching cylinder 502. More specifically, the second cylinder 225 in the smaller-pad suction portion 220 is fixed to the channel switching cylinder 502. The drive 505 can move the smaller-pad suction portion 220 in the placement-plane perpendicular direction through the channel switching cylinder 502. The drive 505 can move the smaller-pad suction portion 220 to set the second suction portion 220 to the retracted state (refer to FIG. 19) or the protruding state (refer to FIG. 20). The drive 505 can move the smaller-pad suction portion 220 relative to the larger-pad suction portion 210 in the larger-pad suction portion 210 to cause the second suction opening 222 in the smaller-pad suction portion 220 to relatively move in and out of the larger-pad suction portion 210. The drive 505 may include, for example, a solenoid. The drive 505 may also include an electric actuator such as a motor.

Note that the drive 505 connected to the larger-pad suction portion 210 may drive the larger-pad suction portion 210 to move the smaller-pad suction portion 220 relative to the larger-pad suction portion 210 in the larger-pad suction portion 210 to cause the second suction opening 222 in the smaller-pad suction portion 220 to relatively move in and out of the larger-pad suction portion 210.

The channel switching cylinder 502 switches the channel in the pipe 550 between being connected to the first channel 216 in the larger-pad suction portion 210 and being connected to the second channel 226 in the smaller-pad suction portion 220. The channel switching cylinder 502 includes a first connection channel 503 for connecting the first channel 216 to the channel in the pipe 550. The first connection channel 503 includes one end connected to the first channel 216. The first connection channel 503 includes another end exposed at the outer surface of the channel switching cylinder 502 and connected to a clearance between the channel switching cylinder 502 and the peripheral wall of the first cylinder 215. The channel switching cylinder 502 also includes a second connection channel 504 for connecting the second channel 226 to the channel in the pipe 550. The second connection channel 504 includes one end connected to the second channel 226. The second connection channel 504 includes another end exposed at the outer surface of the channel switching cylinder 502 and connected to the clearance between the channel switching cylinder 502 and the peripheral wall of the first cylinder 215. The other end of the second connection channel 504 is unconnected to the other end of the first connection channel 503 with a member separating the clearance between the channel switching cylinder 502 and the peripheral wall of the first cylinder 215.

When the smaller-pad suction portion 220 is in the retracted state as illustrated in FIG. 19, the first connection channel 503 is connected to the through-hole 217 in the first cylinder 215 through the clearance between the channel switching cylinder 502 and the peripheral wall of the first cylinder 215. In this state, the channel in the pipe 550 is connected to the first channel 216 in the larger-pad suction portion 210. The multi-size suction portion 200 is thus in the larger pad in-use state. In FIG. 19, a dot-dash line indicates an air flow in the multi-size suction portion 200 in the larger pad in-use state. When the smaller-pad suction portion 220 is in the retracted state, the second connection channel 504 is unconnected to the through-hole 217 in the first cylinder 215 and unconnected to the channel in the pipe 550.

In contrast, when the smaller-pad suction portion 220 is in the protruding state as illustrated in FIG. 20, the second connection channel 504 is connected to the through-hole 217 in the first cylinder 215 through the clearance between the channel switching cylinder 502 and the peripheral wall of the first cylinder 215. In this state, the channel in the pipe 550 is connected to the second channel 226 in the smaller-pad suction portion 220. The multi-size suction portion 200 is thus in the smaller pad in-use state. In FIG. 20, a dot-dash line indicates an air flow in the multi-size suction portion 200 in the smaller pad in-use state. When the smaller-pad suction portion 220 is in the protruding state, the first connection channel 503 is unconnected to the through-hole 217 and unconnected to the channel in the pipe 550.

As described above, the suction assembly 50A can switch each of the multi-size suction portions 200 between the larger pad in-use state and the smaller pad in-use state. The suction assembly controller 137 controls each of the drives 505 in the switching assembly 500 to switch the corresponding multi-size suction portion 200 between the larger pad in-use state and the smaller pad in-use state.

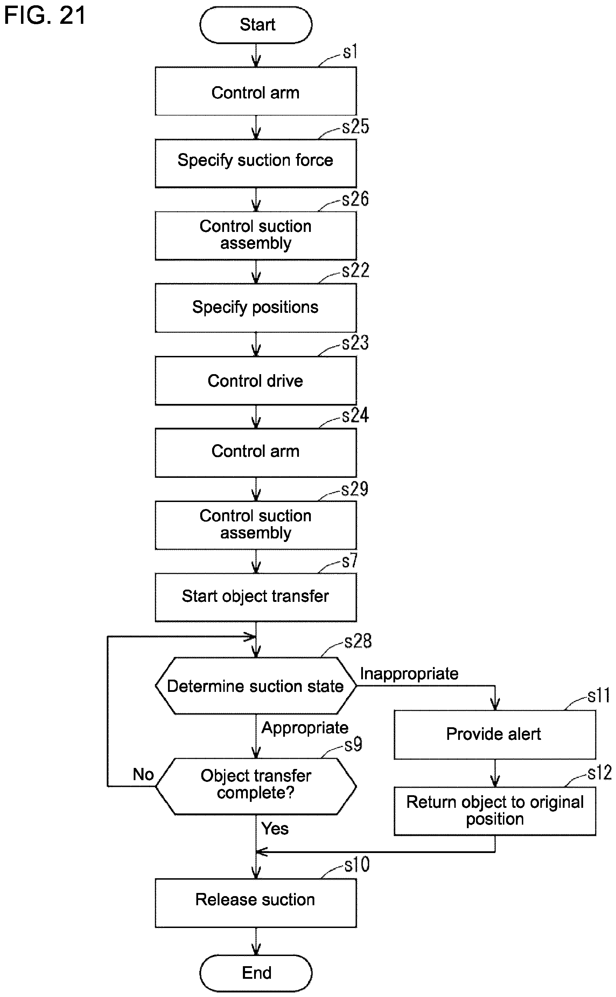

When the suction assembly 50 illustrated in FIGs. 4 to 8 is used, the negative pressure generated in each of the suction pads included in the suction structure 40 is adjustable. However, when the suction assembly 50A is used, the negative pressure generated in each of the suction pads included in the suction structure 40A may be fixed rather than being adjustable. When the suction assembly 50A is used, the suction force from the multi-size suction portion 200 may be switched between two levels by switching its state between the larger pad in-use state and the smaller pad in-use state, or in other words, by switching its in-use pad between the larger pad 211 and the smaller pad 221. Example operations of the hand control device 13 and the robot control device 12 in this case will now be described with reference to FIG. 21.

FIG. 21 is a flowchart of example operations of the hand control device 13 and the robot control device 12. In the robot control device 12 receiving the work-start instruction, step s1 described above is performed to position the robot hand 4 above the object 8. After the robot hand 4 is moved to the position above the object 8, the positioning completion information is input into the hand control device 13.

In the hand control device 13 receiving the positioning completion information, step s25 is performed. In step s25, the suction force specifier 135 specifies the suction force from the suction assembly 50A. The suction force specifier 135 specifies the suction force from each of the multi-size suction portions 200 based on the first object information in the storage 131.

When, for example, the object weight indicated by the weight information included in the first object information is less than a threshold, the suction force specifier 135 specifies a first set value that is relatively low for the suction force from each of the multi-size suction portions 200. In contrast, when the object weight is greater than or equal to the threshold, the suction force specifier 135 specifies a second set value that is relatively high for the suction force from each of the multi-size suction portions 200.

When the specific area indicated by at least one of the first area information or the second area information included in the first object information has a size (e.g., an area) smaller than a threshold, the suction force specifier 135 specifies the first set value that is relatively low for the suction force from each of the multi-size suction portions 200. In contrast, when the specific area has a size larger than or equal to the threshold, the suction force specifier 135 specifies the second set value that is relatively high for the suction force from each of the multi-size suction portions 200.

When the tilt tolerance indicated by the tilt limitation information included in the first object information is greater than or equal to a threshold, the suction force specifier 135 specifies the first set value that is relatively low for the suction force from each of the multi-size suction portions 200. In contrast, when the tilt tolerance is less than the threshold, the suction force specifier 135 specifies the second set value that is relatively high for the suction force from each of the multi-size suction portions 200.

When the first object information includes the shape information, the suction force specifier 135 determines, for example, the size (e.g., the volume) of the object 8 based on the shape information. When the determined size is smaller than a threshold, the suction force specifier 135 specifies the first set value that is relatively low for the suction force from each of the multi-size suction portions 200. In contrast, when the determined size is larger than or equal to the threshold, the suction force specifier 135 specifies the second set value that is relatively high for the suction force from each of the multi-size suction portions 200.

After the suction force from each of the multi-size suction portions 200 is specified in step s25, step s26 is performed. In step s26, the suction assembly controller 137 controls the suction assembly 50A based on the specification result from the suction force specifier 135. More specifically, the suction assembly controller 137 controls each of the switchers 501 in the switching assembly 500 in the suction assembly 50A based on the specification result from the suction force specifier 135. When the multi-size suction portion 200 has the first set value that is relatively low, the suction assembly controller 137 causes the multi-size suction portion 200 to be set to the smaller pad in-use state using the corresponding drive 505 in the switcher 501. Thus, the in-use suction portion is set to the smaller-pad suction portion 220. In contrast, when the multi-size suction portion 200 has the second set value that is relatively high, the suction assembly controller 137 causes the multi-size suction portion 200 to be set to the larger pad in-use state using the corresponding drive 505 in the switcher 501. Thus, the in-use suction portion is set to the larger-pad suction portion 210.

In step s22 following step s26, the position specifier 136 specifies the position of each of the multi-size suction portions 200 based on the second object information in the storage 121. The method for specifying the position of each of the multi-size suction portions 200 based on the second object information is the same as or similar to the method for specifying the position of each of the suction portions 41 based on the second object information described above. The method for specifying the position of each of the multi-size suction portions 200 based on the second object information corresponds to the method for specifying the position of each of the suction portions 41 described above, but with the suction portions 41 and the suction pads 410 replaced with the in-use suction portions and the in-use pads in the multi-size suction portions 200.

In step s23, the suction assembly controller 137 controls the drive 52 to cause each of the multi-size suction portions 200 to be at the position specified in step s22. After the position of each of the multi-size suction portions 200 has been set, the suction assembly controller 137 outputs, to the robot control device 12 through the interface 132, the setting completion information indicating that the position setting for each of the multi-size suction portions 200 is complete.

In the robot control device 12 receiving the setting completion information, step s24 is performed. In step s24, the controller 120 in the robot control device 12 controls the orientation of the arm 3 to move the robot hand 4 downward until the in-use pads come in contact with the object 8. In this step, the controller 120 controls the orientation of the arm 3 to cause the opening edges of the in-use pads to come in proper contact with the object 8. The orientation control on the arm 3 in step s24 is the same as or similar to the orientation control on the arm 3 in step s4 described above. The orientation control on the arm 3 in step s24 corresponds to the orientation control on the arm 3 in step s4 described above, but with the suction portions 41 and the suction pads 410 replaced with the in-use suction portions and the in-use pads.

Note that, when the suction assembly 50A is used, the pressure sensors 55 correspond to the respective multi-size suction portions 200. Each of the pressure sensors 55 detects the contact pressure applied to the object 8 by the in-use pad in the corresponding multi-size suction portion 200. In the same or similar manner, the range sensors 57 correspond to the respective multi-size suction portions 200. Each of the range sensors 57 detects the distance between the in-use suction portion in the corresponding multi-size suction portion 200 and the object 8. In the same or similar manner, the negative pressure sensors 54 correspond to the respective multi-size suction portions 200. Each of the negative pressure sensors 54 detects the negative pressure in the in-use pad in the corresponding multi-size suction portion 200.

Upon the in-use suction portions coming in contact with the object 8, the controller 120 outputs, to the hand control device 13 through the interface 123, the preparation completion information indicating completion of preparation to start suction. In the hand control device 13 receiving the preparation completion information, step s29 is performed. In step s29, the suction assembly controller 137 controls the negative pressure generator 51 to generate a predetermined negative pressure in the in-use pad in each of the multi-size suction portions 200. The in-use pads in the multi-size suction portions 200 thus suck the object 8. When the in-use pad is the larger pad 211, the second set value that is relatively high is specified for the suction force from the in-use suction portion. In contrast, when the in-use pad is the smaller pad 221, the first set value that is relatively low is specified for the suction force from the in-use suction portion. Upon the multi-size suction portions 200 starting sucking the object 8, the controller 130 outputs, to the robot control device 12 through the interface 132, the suction start information indicating that suction has started.

Step s7 described above is then performed. Step s28 is then performed. In step s28, the determiner 138 determines the suction state of the suction assembly 50A sucking the object 8 based on the detection results from the sensor unit 59. The method for determining the suction state of the suction assembly 50A sucking the object 8 in step s28 is the same as or similar to the method for determining the suction state of the suction assembly 50 sucking the object 8 in step s8 described above. The method for determining the suction state of the suction assembly 50A sucking the object 8 corresponds to the method for determining the suction state of the suction assembly 50 sucking the object 8 described above, but with the suction portions 41 and the suction pads 410 replaced with the in-use suction portions and the in-use pads.

When the suction state is determined to be inappropriate in step s28, step s11 described above is performed. Following step s11, steps s12 and s10 described above are performed. In contrast, when the suction state is determined to be appropriate in step s28, step s9 described above is performed. In the subsequent steps, the hand control device 13 and the robot control device 12 operate in the same or similar manner as in FIG. 11.

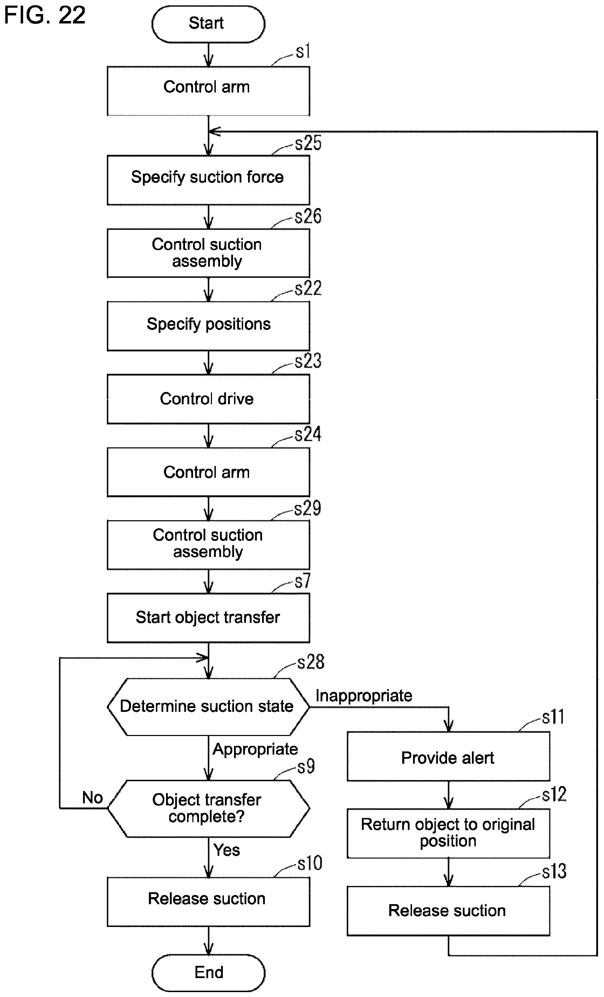

Note that, when the suction assembly 50A is used, the position specifier 136 may re-specify the position of the multi-size suction portion 200 based on the determination result of the suction state from the determiner 138, as in the example illustrated in FIG. 15 described above. The suction force specifier 135 may re-specify the suction force from the suction assembly 50A based on the determination result of the suction state from the determiner 138. FIG. 22 is a flowchart of example operations of the hand control device 13 and the robot control device 12 in this case.

In the example in FIG. 22, when the suction state is determined to be inappropriate in step s28, steps s11, s12, and s13 described above are performed sequentially. This causes the object 8 to be placed on the work-start table. Step s25 is then performed to re-specify the suction force from the suction assembly 50A. In step s25, for example, the suction force specifier 135 increases the set value for the suction force from each of the multi-size suction portions 200. Following step s25, step s26 is performed. When each of the in-use suction portions is the smaller-pad suction portion 220, each of the in-use suction portions is changed to the larger-pad suction portion 210 in step s26. Step s22 is then performed. In contrast, when each of the in-use suction portions is the larger-pad suction portion 210, step s22 is performed without step s26 being performed. In step s22, the positions of the multi-size suction portions 200 are re-specified. Re-specifying the positions of the multi-size suction portions 200 corresponds to re-specifying the positions of the suction portions 41 described above, but with the suction portions 41 replaced with the multi-size suction portions 200.

After the positions of the multi-size suction portions 200 are re-specified in step s22, step s23 is performed. The positions of the multi-size suction portions 200 are thus changed to the positions re-specified in step s22. Steps s24 and s29 are then performed sequentially. When each of the in-use suction portions is changed to the larger-pad suction portion 210 in step s26, the suction assembly controller 137 controls, in step s29, the negative pressure generator 51 to generate a predetermined negative pressure in the in-use pad (specifically, the larger pad 211) in each of the multi-size suction portions 200, as in step s29 in FIG. 21. When each of the in-use suction portions is changed from the smaller-pad suction portion 220 to the larger-pad suction portion 210 in step s26, each of the multi-size suction portions 200 has a greater suction force under a constant negative pressure in the in-use pad. Thus, the suction force from each of the multi-size suction portions 200 is set to the set value re-specified in step s25. In contrast, when step s26 is not performed, the negative pressure generator 51 increases, in step s29, the negative pressure in each of the in-use suction portions to set its suction force to the set value re-specified in step s25 under the control of the suction assembly controller 137.

As described above, in the example in FIG. 22, the suction force from the multi-size suction portion 200 is re-specified based on the determination result of the suction state from the determiner 138. This improves the suction state of the multi-size suction portion 200 sucking the object 8.

Note that, although both the position of the multi-size suction portion 200 and the suction force from the suction assembly 50A are re-specified based on the determination result of the suction state from the determiner 138 in the example in FIG. 22, either the position of the multi-size suction portion 200 or the suction force from the suction assembly 50A may be re-specified, in the same manner as or in a similar manner to the case with the suction assembly 50.

In step s25, the suction force may be set individually for each of the multi-size suction portions 200, as in step s5. For example, the first object information may include the shape information indicating the shape of the object 8 with a nonuniform thickness. In this case, for example, steps s25 and s26 are performed between steps s23 and s24. In other words, the suction force from the multi-size suction portion 200 is set after the position of the multi-size suction portion 200 is set. In step s25, for example, the suction force specifier 135 identifies, based on the shape information, a thicker portion of the object 8 with a relatively large thickness and a thinner portion of the object 8 with a relatively small thickness. The suction force specifier 135 specifies the second set value that is relatively high for the suction force from one of the multi-size suction portions 200 that sucks the thicker portion of the object 8, and specifies the first set value that is relatively low for the suction force from one of the multi-size suction portions 200 that sucks the thinner portion of the object 8. In step s26 following step s25, the multi-size suction portion 200 with the first set value specified for its suction force is set to the smaller pad in-use state, and the multi-size suction portion 200 with the second set value specified for its suction force is set to the larger pad in-use state.

In another example, the first object information may include the center-of-gravity position information. In this case, for example, steps s25 and s26 are performed between steps s23 and s24. In step s25, the suction force specifier 135 determines, for each of the multi-size suction portions 200, the distance between a suction position at which the multi-size suction portion 200 sucks the object 8 and the object center-of-gravity position indicated by the center-of-gravity position information in the specific plan view. When the distance determined for one of the multi-size suction portions 200 is less than a threshold, the suction force specifier 135 specifies the second set value for the suction force from the multi-size suction portion 200. In contrast, when the distance determined for one of the multi-size suction portions 200 is greater than or equal to the threshold, the suction force specifier 135 specifies the first set value for the suction force from the multi-size suction portion 200. In step s26 following step s25, the multi-size suction portion 200 with the first set value specified for its suction force is set to the smaller pad in-use state, and the multi-size suction portion 200 with the second set value specified for its suction force is set to the larger pad in-use state.

In the example in FIG. 22, the suction force specifier 135 may re-specify the suction force from the suction assembly 50A based on the center-of-gravity position information included in the first object information in step s25 after the suction state is determined to be inappropriate in step s28. In this case, for example, steps s25 and s26 are performed between steps s23 and s24. In step s25 following step s23, for example, the suction force specifier 135 determines, for each of the multi-size suction portions 200, the distance between a suction position at which the multi-size suction portion 200 sucks the object 8 and the object center-of-gravity position indicated by the center-of-gravity position information in the specific plan view. The suction force specifier 135 increases the set value for the suction force from the multi-size suction portion 200 for the determined distance being less than or equal to a threshold. When the set value is increased in step s25 for the multi-size suction portion 200 in the smaller pad in-use state, the state of the multi-size suction portion 200 is changed to the larger pad in-use state in step s26. In contrast, when the set value is increased for the multi-size suction portion 200 in the larger pad in-use state, the negative pressure is decreased for the in-use pad in the in-use suction portion of the multi-size suction portion 200 in step s29, without step s26 being performed.

In the example in FIG. 22, the suction force specifier 135 may re-specify the suction force from the multi-size suction portion 200 based on information from the sensor unit 59 that varies based on the suction state of the multi-size suction portion 200 sucking the object 8. In step s25 following step s13, for example, the suction force specifier 135 may re-specify, based on the detection result from the negative pressure sensor 54, the suction force from the multi-size suction portion 200 corresponding to the negative pressure sensor 54. When, for example, the negative pressure detected by the negative pressure sensor 54 is less than a predetermined range (in other words, an appropriate range), the suction force specifier 135 decreases the set value for the suction force from the multi-size suction portion 200 corresponding to the negative pressure sensor 54. In contrast, when the negative pressure detected by the negative pressure sensor 54 is greater than the predetermined range, the suction force specifier 135 increases the set value for the suction force from the multi-size suction portion 200 corresponding to the negative pressure sensor 54. When the set value for the suction force is decreased in step s25 for the multi-size suction portion 200 with its in-use suction portion being the larger-pad suction portion 210, the in-use suction portion of the multi-size suction portion 200 is changed to the smaller-pad suction portion 220 in step s26. In contrast, when the set value for the suction force is decreased in step s25 for the multi-size suction portion 200 with its in-use suction portion being the smaller-pad suction portion 220, the negative pressure is increased for the in-use pad in the in-use suction portion of the multi-size suction portion 200 in step s29, without step s26 being performed. When the set value for the suction force is increased in step s25 for the multi-size suction portion 200 with its in-use suction portion being the smaller-pad suction portion 220, the in-use suction portion of the multi-size suction portion 200 is changed to the larger-pad suction portion 210 in step s26. In contrast, when the set value for the suction force is increased in step s25 for the multi-size suction portion 200 with its in-use suction portion being the larger-pad suction portion 210, the negative pressure is decreased for the in-use pad in the in-use suction portion of the multi-size suction portion 200 in step s29, without step s26 being performed.

In step s25 following step s13, the suction force specifier 135 may re-specify, based on the detection result from the pressure sensor 55, the suction force from the multi-size suction portion 200 corresponding to the pressure sensor 55. When, for example, the contact pressure detected by the pressure sensor 55 is greater than a predetermined range, the suction force specifier 135 decreases the set value for the multi-size suction portion 200 corresponding to the pressure sensor 55. In contrast, when the contact pressure detected by the pressure sensor 55 is less than the predetermined range, the suction force specifier 135 increases the set value for the multi-size suction portion 200 corresponding to the pressure sensor 55. The processing subsequent to step s25 is the same as or similar to the processing performed when the suction force is re-specified based on the detection result from the negative pressure sensor 54 for the multi-size suction portion 200 corresponding to the negative pressure sensor 54.

In step s25 following step s13, the suction force specifier 135 may re-specify, based on the detection result from the range sensor 57, the suction force from the multi-size suction portion 200 corresponding to the range sensor 57. When, for example, the distance detected by the range sensor 57 is greater than a predetermined range, the suction force specifier 135 increases the set value for the multi-size suction portion 200 corresponding to the range sensor 57. In contrast, when the distance detected by the range sensor 57 is less than the predetermined range, the suction force specifier 135 increases the set value for the multi-size suction portion 200 corresponding to the range sensor 57. The processing subsequent to step s25 is the same as or similar to the processing performed when the suction force is re-specified based on the detection result from the negative pressure sensor 54 for the multi-size suction portion 200 corresponding to the negative pressure sensor 54.

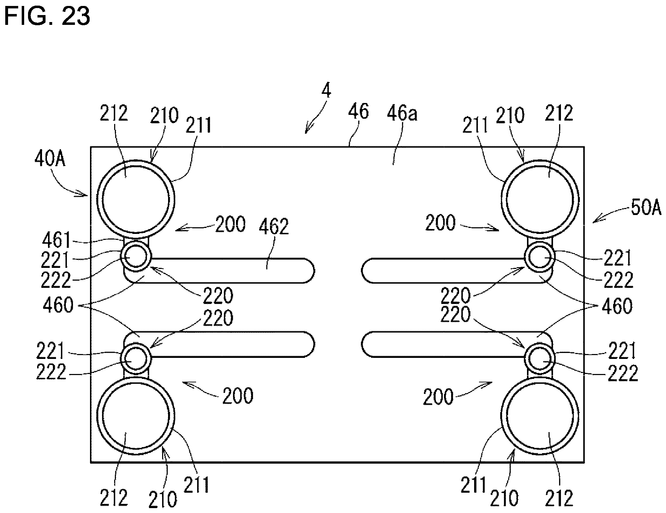

Although the first suction portion 210 and the second suction portion 220 in the suction portion 200 have the multi-size nested structure in the above example, the first suction portion 210 and the second suction portion 220 may be adjacent to each other as illustrated in FIG. 23. In each of the suction portions 200, the first suction pad 211 and the second suction pad 221 are located in the same plane. In the example in FIG. 23, the suction assembly 50A may be configured to individually change each of the positions of the first suction portion 210 and the second suction portion 220 included in each of the suction portions 200.

In the example in FIG. 23, the suction portion 200 may have, for example, a third state (also referred to as a two-pad in-use state), in addition to the first state and the second state. In the third state, both the larger-pad suction portion 210 and the smaller-pad suction portion 220 suck the object 8. In the suction portion 200 in the two-pad in-use state, both the larger pad 211 and the smaller pad 221 have a negative pressure to suck the object 8 at the same time. The suction assembly 50A can switch the suction portion 200 among the larger pad in-use state, the smaller pad in-use state, and the two-pad in-use state under the control of the suction assembly controller 137. When, for example, the larger pad 211 and the smaller pad 221 have the same negative pressure value, the suction force from the suction portion 200 is greater in the two-pad in-use state than in the larger pad in-use state, and is greater in the larger pad in-use state than in the smaller pad in-use state.

The hand control device 13 can set the suction force from the suction portion 200 to at least three levels by switching the suction portion 200 among the larger pad in-use state, the smaller pad in-use state, and the two-pad in-use state. For example, the larger pad 211 and the smaller pad 221 may have the same negative pressure value independently of the state of the suction portion 200. When the object weight indicated by the weight information included in the first object information is less than a first threshold, the suction force specifier 135 specifies, in step s25, a first set value for the suction force from each of the suction portions 200. When the object weight is greater than or equal to the first threshold and less than a second threshold (the second threshold > the first threshold), the suction force specifier 135 specifies a second set value for the suction force from each of the suction portions 200. When the object weight is greater than or equal to the second threshold, the suction force specifier 135 specifies a third set value for the suction force from each of the suction portions 200. The third set value is higher than the first set value and the second set value. When the first set value is specified for the suction force from the suction portion 200, the suction assembly controller 137 sets, in step s26, the suction portion 200 to the smaller pad in-use state. Thus, the suction force from the suction portion 200 is set to the first set value that is a lower value. When the second set value is specified for the suction force from the suction portion 200, the suction assembly controller 137 sets the suction portion 200 to the larger pad in-use state. Thus, the suction force from the suction portion 200 is set to the second set value that is a medium value. When the third set value is specified for the suction force from the suction portion 200, the suction assembly controller 137 sets the suction portion 200 to the two-pad in-use state. Thus, the suction force from the suction portion 200 is set to the third set value that is a higher value.

Note that, in the example in FIG. 22, the suction force can be re-specified to be increased for the suction portion 200 in the larger pad in-use state. In this case, the state of the suction portion 200 may be changed to the two-pad in-use state. The suction force can be increased for the suction portion 200 in the two-pad in-use state. In this case, the negative pressure may be decreased for at least one of the larger pad 211 or the smaller pad 221. The suction force can be re-specified to be decreased for the suction portion 200 in the two-pad in-use state. In this case, the state of the suction portion 200 may be changed to the larger pad in-use state or to the smaller pad in-use state.

The suction portion 200 may include three or more suction portions with different-sized suction openings. In this case, in the suction portion 200, the three or more suction portions with different-sized suction openings may have a multi-size nested structure. In the suction portion 200, the three or more suction portions with different-sized suction openings may also be arranged in a planar manner. For example, the suction portion 200 may include a larger-opening suction portion with a larger suction opening, a medium-opening suction portion with a medium-sized suction opening, and a smaller-opening suction portion with a smaller suction opening. In this case, the object 8 with the weight greater than or equal to the second threshold may be sucked with the larger-opening suction portion. The object 8 with the weight greater than or equal to the first threshold and less than the second threshold may be sucked with the medium-opening suction portion. The object 8 with the weight less than the first threshold may be sucked with the smaller-opening suction portion. In the suction portion 200, the larger-opening suction portion, the medium-opening suction portion, and the smaller-opening suction portion may have a multi-size nested structure. More specifically, in the suction portion 200, the medium-opening suction portion may be configured to protrude from the larger-opening suction portion, and the smaller-opening suction portion may be configured to protrude from the medium-opening suction portion. When the suction portion 200 includes the three or more suction portions with different-sized suction openings, at least two of the three or more suction portions may suck the object 8 at the same time.

The first object information used to specify the suction force from the suction portion may include strength information indicating the strength of the object 8. The strength information may indicate, for example, a portion of the object 8 with low strength (also referred to as a low-strength portion). In this case, the set value for the suction force may be lower for one of the suction portions 41 that sucks the low-strength portion indicated by the strength information than for one of the suction portions 41 that sucks the portion other than the low-strength portion. The set value for the suction force may be lower for one of the suction portions 200 that sucks the low-strength portion than for one of the suction portions 200 that sucks the portion other than the low-strength portion. In this case, for example, the suction portion 200 that sucks the low-strength portion may use the smaller-pad suction portion 220 having a less suction force to suck the object 8. The suction portion 200 that sucks the portion other than the low-strength portion may use the larger-pad suction portion 210 having a greater suction force to suck the object 8.

The suction force from the smaller-pad suction portion 220 that sucks the low-strength portion may be set equal to the suction force from the larger-pad suction portion 210 that sucks the portion other than the low-strength portion. In this case, the force per unit area (also referred to as a suction pressure) applied to the low-strength portion sucked by the smaller-pad suction portion 220 is less than the force per unit area applied to the portion sucked by the larger-pad suction portion 210 other than the low-strength portion. The low-strength portion is thus less likely to be damaged.

When the suction portions 200 in the suction assembly 50A include a suction portion 200 that sucks the object 8 using the larger-pad suction portion 210 (also referred to as a larger pad in-use suction portion 200) and a suction portion 200 that sucks the object 8 using the smaller-pad suction portion 220 (also referred to as a smaller pad in-use suction portion 200) as described above, the suction force from the smaller-pad suction portion 220 in the smaller pad in-use suction portion 200 may not be less than the suction force from the larger-pad suction portion 210 in the larger pad in-use suction portion 200. The suction force from the smaller-pad suction portion 220 in the smaller pad in-use suction portion 200 may be equal to, greater than, or less than the suction force from the larger-pad suction portion 210 in the larger pad in-use suction portion 200.

When the suction assembly 50 is used, the drive 52 may be configured to move at least one of the suction pads 410 away from or closer to the bottom surface 46a of the body 46 of the outer case 45 under the control of the suction assembly controller 137. In this case, for example, the drive 52 may expand or retract at least one of the suction portions 41 to move the suction pad 410 away from or closer to the bottom surface 46a. The position of at least one of the suction pads 410 may be changed in the direction perpendicular to the bottom surface 46a.

With the suction pad 410 movable away from or closer to the bottom surface 46a in this manner, any section 800 in the upper surface of the object 8 that is lower than the surrounding areas as illustrated in the example in FIG. 10 can be sucked by the suction pad 410 moving away from the bottom surface 46a above the section 800.

When the suction assembly 50A is used, at least one of the suction portions 200 may be expandable and retractable as a whole in the direction perpendicular to the bottom surface 46a. In this case as well, for example, any section 800 in the upper surface of the object 8 that is lower than the surrounding areas as illustrated in the example in FIG. 10 can be sucked by the larger-pad suction portion 210 or the smaller-pad suction portion 220 in the suction portion 200 expanding as a whole above the section 800.

In the above example, the switching assembly 500 does not change the position of the smaller pad 221 for the suction portion 200 in the smaller pad in-use state. However, for at least one of the suction portions 200 in the smaller pad in-use state, the switching assembly 500 may move the smaller pad 221 away from or closer to the bottom surface 46a of the body 46. In this case, for example, the section 800 illustrated in FIG. 10 may be small, and the small section 800 can be sucked by the smaller pad 221 in the smaller pad in-use suction portion 200 moving away from the bottom surface 46a above the section 800. In this case, for example, the section other than the section 800 may be sucked with the larger pad 211. The suction force from the smaller-pad suction portion 220 to suck the section 800 may be equal to, less than, or greater than the suction force from the larger-pad suction portion 210 to suck the section other than the section 800.

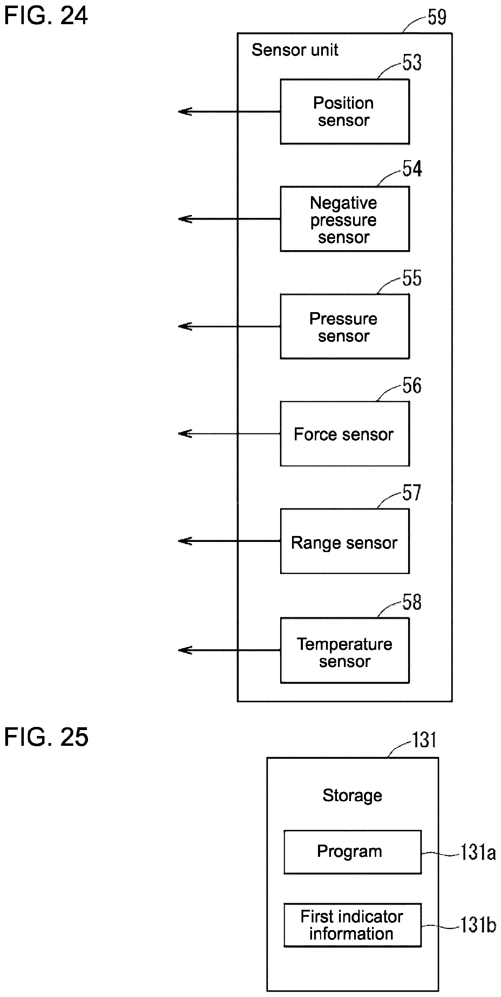

In the above example, the suction force specifier 135 specifies the suction force from the suction portion (the suction portion 41 or the suction portion 200) based on the first object information in step s5 or step s25. However, the suction force specifier 135 may specify the suction force from the suction portion based on the first object information and other information. For example, the suction pad, which is an elastic member, has a viscoelastic characteristic that can change with environment. The suction force specifier 135 may thus specify the suction force from the suction portion based on the first object information and based on an environmental change in the viscoelastic characteristic of the suction pad in the suction portion. For example, the suction force specifier 135 may specify the suction force from the suction portion based on the first object information and based on a temperature-related change in the viscoelastic characteristic of the suction pad in the suction portion. In this case, as illustrated in FIG. 24, the sensor unit 59 includes, for example, a temperature sensor 58 that detects the temperature around the suction pad in the suction portion. The temperature sensor 58 may include, for example, a semiconductor temperature sensor such as a thermistor, or may include another member. The temperature sensor 58 is located in, for example, the body 46 of the outer case 45 in the robot hand 4. For example, the temperature sensor 58 repeatedly detects the temperature around the suction pad and outputs the detection results to the hand control device 13.

When the suction assembly 50 is used, the sensor unit 59 may include multiple temperature sensors 58 that detect the temperatures around the respective suction pads 410. The sensor unit 59 may also include a single temperature sensor 58 common to the suction pads 410. In this case, the temperature detected by the single temperature sensor 58 is used as the temperature around each of the suction pads. When the suction assembly 50A is used, multiple temperature sensors 58 may be included for the respective suction portions 200. In this case, the temperature detected by each of the temperature sensors 58 is used as the temperature around each of the larger pad 211 and the smaller pad 221 in the corresponding suction portion 200. A single temperature sensor 58 common to the suction portions 200 may also be included. In this case, the temperature detected by the single temperature sensor 58 is used as the temperature around each of the larger pad 211 and the smaller pad 221 in each of the suction portions 200. Note that the temperature of the suction pad may be used as the temperature around the suction pad.

To specify the suction force from the suction portion based on the first object information and based on the temperature-related change in the viscoelastic characteristic of the suction pad in the suction portion, for example, the suction force specifier 135 first provisionally specifies the suction force based on the first object information as described above. The suction force specifier 135 then changes the provisionally specified suction force (also referred to as a provisional suction force) based on the temperature detected by the temperature sensor 58. The suction force specifier 135 determines the changed provisional suction force to be a final suction force.

The suction pad tends to be harder with changes in its viscoelastic characteristic caused by lower temperatures around the suction pad. The suction force specifier 135 thus increases the provisional suction force for a lower temperature around the suction pad in the suction portion. This allows the object 8 to be sucked more stably by the suction portion independently of the temperature-related change in the viscoelastic characteristic of the suction pad in the suction portion.

The suction force specifier 135 may specify the suction force from the suction portion based on the first object information and based on a change over time in the viscoelastic characteristic of the suction pad in the suction portion. In this case, as illustrated in FIG. 25, for example, the nonvolatile memory included in the storage 131 may store first indicator information 131b that is an indicator of the change over time in the viscoelastic characteristic of the suction pad.

The first indicator information 131b indicates, for example, a time elapsed from a reference timing (also simply referred to as an elapsed time). The reference timing may be, for example, a timing at which the robot hand 4 including the suction pad is shipped, a timing at which the robot hand 4 is first installed in a work environment, or a timing at which the robot hand 4 first operates. A longer elapsed time causes a greater change over time in the viscoelastic characteristic of the suction pad. The elapsed time may thus be an indicator of the change over time in the viscoelastic characteristic. The controller 130 updates the first indicator information 131b in the storage 131 in response to, for example, an output signal from a timer included in the hand control device 13.

To specify the suction force from the suction portion based on the first object information and based on the change over time in the viscoelastic characteristic of the suction pad in the suction portion, for example, the suction force specifier 135 changes the provisional suction force based on the elapsed time indicated by the first indicator information 131b in the storage 131. The suction force specifier 135 determines the changed provisional suction force to be a final suction force.

The suction pad tends to be harder with changes over time in its viscoelastic characteristic. The suction force specifier 135 thus increases the provisional suction force for a longer elapsed time indicated by the first indicator information 131b. This allows the object 8 to be sucked more stably by the suction portion independently of the change over time in the viscoelastic characteristic of the suction pad in the suction portion.

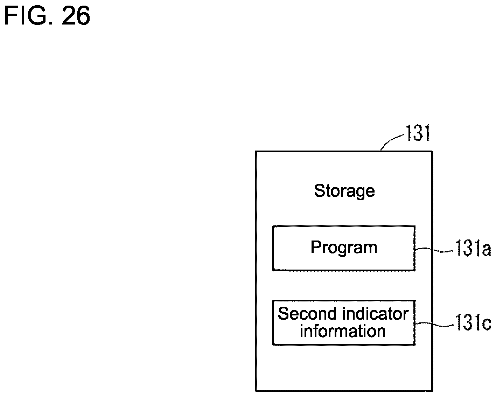

The suction force specifier 135 may specify the suction force from the suction portion based on the first object information and based on a change in the viscoelastic characteristic of the suction pad in the suction portion with use. In this case, as illustrated in FIG. 26, for example, the nonvolatile memory included in the storage 131 may store second indicator information 131c that is an indicator of the change in the viscoelastic characteristic of the suction pad with use.

The second indicator information 131c indicates, for example, a total operating time of the robot hand 4. A longer total operating time causes a greater change in the viscoelastic characteristic of each of the suction pads with use. The total operating time may thus be an indicator of the change in the viscoelastic characteristic of the suction pad with use. The controller 130 updates the second indicator information 131c in the storage 131 in response to, for example, an output signal from the timer included in the hand control device 13.

To specify the suction force from the suction portion based on the first object information and based on the change in the viscoelastic characteristic of the suction pad in the suction portion with use, for example, the suction force specifier 135 changes the provisional suction force based on the total operating time indicated by the second indicator information 131c in the storage 131. The suction force specifier 135 determines the changed provisional suction force to be a final suction force.

The suction pad tends to be harder with changes in its viscoelastic characteristic with use. The suction force specifier 135 thus increases the provisional suction force for a longer total operating time indicated by the second indicator information 131c. This allows the object 8 to be sucked more stably by the suction portion independently of the change in the viscoelastic characteristic of the suction pad in the suction portion with use. Note that the second indicator information 131c is not limited to the total operating time of the robot hand 4. For example, the second indicator information 131c may indicate a count of sucking performed by the suction portion, or may indicate a total time of sucking performed by the suction portion (also referred to as a total use time).

The suction force specifier 135 may specify the suction force from the suction portion based on at least two selected from the group consisting of the environmental change in the viscoelastic characteristic of the suction pad, the change over time in the viscoelastic characteristic of the suction pad, and the change in the viscoelastic characteristic of the suction pad with use. For example, the suction force specifier 135 may specify the suction force from the suction portion based on at least two selected from the group consisting of the detection result of the temperature around the suction pad, the first indicator information 131b, and the second indicator information 131c.

For example, the suction force specifier 135 may specify the suction force from the suction portion based on the detection result of the temperature around the suction pad and based on the first indicator information 131b. In this case, for example, the suction force specifier 135 changes the provisional suction force using an evaluation value for the temperature detected by the temperature sensor 58 (also referred to as a third evaluation value) and an evaluation value for the elapsed time indicated by the first indicator information 131b (also referred to as a fourth evaluation value). The third evaluation value is, for example, a real number greater than zero, and is greater for a higher temperature detected by the temperature sensor 58. The fourth evaluation value is, for example, a real number greater than zero, and is greater for a longer elapsed time indicated by the first indicator information 13 1b. For example, the suction force specifier 135 increases the provisional suction force for a higher value resulting from dividing the fourth evaluation value by the third evaluation value. This allows the object 8 to be sucked more stably independently of the temperature-related change in the viscoelastic characteristic of the suction pad and the change over time in the viscoelastic characteristic of the suction pad.

In another example, the suction force specifier 135 may specify the suction force from the suction portion based on the detection result of the temperature around the suction pad and based on the second indicator information 131c. In this case, for example, the suction force specifier 135 changes the provisional suction force using the third evaluation value and an evaluation value for the total operating time indicated by the second indicator information 131c (also referred to as a fifth evaluation value). The fifth evaluation value is, for example, a real number greater than zero, and is greater for a longer total operating time indicated by the second indicator information 131c. For example, the suction force specifier 135 increases the provisional suction force for a higher value resulting from dividing the fifth evaluation value by the third evaluation value. This allows the object 8 to be sucked more stably independently of the temperature-related change in the viscoelastic characteristic of the suction pad and the change in the viscoelastic characteristic of the suction pad with use.

In another example, the suction force specifier 135 may specify the suction force from the suction portion based on the first indicator information 131b and based on the second indicator information 131c. In this case, for example, the suction force specifier 135 changes the provisional suction force using the fourth evaluation value and the fifth evaluation value. For example, the suction force specifier 135 increases the provisional suction force for a higher value resulting from multiplying the fourth evaluation value by the fifth evaluation value. This allows the object 8 to be sucked more stably independently of the change over time in the viscoelastic characteristic of the suction pad and the change in the viscoelastic characteristic of the suction pad with use.

In another example, the suction force specifier 135 may specify the suction force from the suction portion based on the detection result of the temperature around the suction pad, the first indicator information 131b, and the second indicator information 131c. In this case, for example, the suction force specifier 135 changes the provisional suction force using the third evaluation value, the fourth evaluation value, and the fifth evaluation value. For example, the suction force specifier 135 increases the provisional suction force for a higher value resulting from multiplying the fourth evaluation value by the fifth evaluation value and then dividing the resultant by the third evaluation value. This allows the object 8 to be sucked more stably independently of the temperature-related change in the viscoelastic characteristic of the suction pad, the change over time in the viscoelastic characteristic of the suction pad, and the change in the viscoelastic characteristic of the suction pad with use.

The suction pad in the suction portion may be replaceable. In this case, the controller 130 in the hand control device 13 may determine a replacement time for the suction pad. When the replacement time for the suction pad has been reached, the controller 130 may output, to the interface 132, replacement notification information indicating that the replacement time has been reached. The controller 130 may determine the replacement time for the suction pad based on, for example, the first indicator information 131b in the storage 131. In this case, the controller 130 may determine that the replacement time for the suction pad has been reached when the elapsed time indicated by the first indicator information 131b reaches a predetermined time. The controller 130 may also determine the replacement time for the suction pad based on, for example, the second indicator information 131c in the storage 131. In this case, the controller 130 may determine that the replacement time for the suction pad has been reached when the total operating time indicated by the second indicator information 131c reaches a predetermined time.

The replacement notification information output from the hand control device 13 may be input into, for example, the terminal 14. In this case, the terminal 14 receiving the replacement notification information may notify the user that the replacement time for the suction pad has been reached. For example, the terminal 14 may notify the user that the replacement time for the suction pad has been reached using the display included in the terminal 14. The terminal 14 may notify the user that the replacement time for the suction pad has been reached by outputting sound through the speaker included in the terminal 14. The notifier, such as the display, that provides notifications to the user may be included in the system control device 11. In this case, the notifier in the system control device 11 may receive the replacement notification information and notify the user that the replacement time for the suction pad has been reached. The notifier that provides notifications to the user may be included in the hand control device 13. In this case, the notifier in the hand control device 13 may notify the user that the replacement time for the suction pad has been reached. The notifier that provides notifications to the user may be included in the robot control device 12. In this case, the notifier in the robot control device 12 may receive the replacement time information and notify the user that the replacement time for the suction pad has been reached.

The storage 131 in the hand control device 13 may store replacement-performed information indicating a time (e.g., a date and time) at which the suction pad was replaced. The controller 130 may determine the next replacement time for the suction pad based on the replacement-performed information in the storage 131. For example, the controller 130 may determine that the next replacement time for the suction pad has been reached when a predetermined time has elapsed from the time indicated by the replacement-performed information. When the next replacement time for the suction pad has been reached, the controller 130 may output, to the interface 132, the replacement notification information indicating that the next replacement time has been reached.

The suction structure 40A may include at least one suction portion 41 in place of one or more of the suction portions 200. In other words, the suction structure 40A may include at least one suction portion 200 and at least one suction portion 41.

The controller 130 in the hand control device 13 may estimate the weight of the object 8 based on the detection result from the force sensor 56 while the object 8 is being transferred. In this case, the controller 130 may compare, in step s8 or s28, the estimated weight with a set weight of the object 8 stored in the storage 131, in addition to determining the suction state. The set weight of the object 8 refers to a weight set by the user for the object 8. The user inputs the set weight into, for example, the terminal 14. The set weight input into the terminal 14 is input into the hand control device 13 and stored into the storage 131. In step s8 or s28, the controller 130 determines, for example, whether an absolute value of the difference between the estimated weight and the set weight is within a predetermined range. When the absolute value of the difference between the estimated weight and the set weight is within the predetermined range and when the suction state is appropriate, the controller 130 performs step s9. In contrast, when the absolute value of the difference between the estimated weight and the set weight is out of the predetermined range or when the suction state is inappropriate, the controller 130 performs step s11 to cause the interface 132 to output the alert information. The alert information may include information indicating that the estimated weight is different from the set weight.

Note that the arm 3 may include a current sensor for detecting a current flowing in a motor that drives a joint in the arm 3. In this case, the controller 130 may estimate the weight of the object 8 based on the detection result from the current sensor. The current sensor may be, for example, a magnetic sensor, a sensor with a shunt resistor, or a sensor with an amplifier. The hand control device 13 may receive the detection result from the current sensor in the arm 3 directly from the current sensor or through the robot control device 12 that controls the arm 3.

Although the suction state is determined independently of the first object information and the second object information in the above example, the suction state may be determined based on the first object information and the second object information. For example, the determination of the suction state in step s8 or s28 may be performed when the second object information includes at least one selected from the group consisting of the center-of-gravity position information, the first area information, and the second area information, and may not be performed when the second object information includes the shape information alone. The determination of the suction state may be performed when the first object information includes at least one selected from the group consisting of the first area information, the second area information, and the tilt limitation information, and may not be performed when the first object information includes the weight information alone. When the determination of the suction state in step s8 or s28 is not performed, step s9 is repeatedly performed until transfer of the object 8 to the work-target table is complete. The determination of the suction state may not be performed when the second object information includes the center-of-gravity position information alone.

The robot control device 12 and the hand control device 13 together may be a single control device. At least some of the functions of the controller 130 in the hand control device 13 (e.g., at least one selected from the group consisting of the suction force specifier 135, the position specifier 136, and the determiner 138) may be implemented by the controller 120 in the robot control device 12. At least one of the robot control device 12 or the hand control device 13 may control the robot 2 through a network including the Internet. In this case, at least one of the robot control device 12 or the hand control device 13 may be, for example, a cloud server. The cloud server may be implemented by multiple computers. The robot control system 10 may eliminate at least one of the system control device 11 or the terminal 14.

The suction assembly and the system including the suction assembly have been described in detail, but the above structures are illustrative in all respects, and the present disclosure is not limited to the above structures. The above embodiments may be combined in any manner unless any contradiction arises. Examples other than those illustrated above may also be included without departing from the scope of the present disclosure.

One or more embodiments of the present disclosure provide the structures described below.
(1) In one embodiment, a processing device includes a suction force specifier that specifies, based on first object information about an object, a suction force from a suction assembly to suck the object.
(2) In the processing device according to (1), the first object information includes at least one selected from the group consisting of weight information indicating a weight of the object, first area information indicating an area on a surface of the object inaccessible to sucking performed by the suction assembly, second area information indicating an area on the surface of the object prohibited from being sucked by the suction assembly, and tilt limitation information indicating a limitation of tilt of the object.
(3) In the processing device according to (1) or (2), the suction assembly includes a plurality of suction portions. The suction force specifier specifies, individually for each of the plurality of suction portions, a suction force from the suction portion to suck the object based on the first object information.
(4) The processing device according to any one of (1) to (3) further includes a suction assembly controller that controls the suction assembly based on a suction force specification result from the suction force specifier.
(5) In the processing device according to (4), the suction assembly includes at least one suction portion and a negative pressure generator that generates a negative pressure in the at least one suction portion. The suction force specifier specifies, based on the first object information, a suction force from the at least one suction portion to suck the object. The suction assembly controller controls the negative pressure generator based on the suction force specification result.
(6) In the processing device according to (4), the suction assembly includes a suction portion. The suction force specifier specifies, based on the first object information, a suction force from the suction portion to suck the object. The suction portion includes a first suction portion including a first suction opening, and a second suction portion including a second suction opening smaller than the first suction opening. The suction assembly is switchable between a first state in which the first suction portion sucks the object and a second state in which the second suction portion sucks the object. The suction assembly controller switches the suction assembly between the first state and the second state based on the suction force specification result.
(7) In the processing device according to (6), the suction assembly is switchable among the first state, the second state, and a third state in which the first suction portion and the second suction portion suck the object. The suction assembly controller switches the suction assembly among the first state, the second state, and the third state based on the suction force specification result.
(8) In the processing device according to (6), the second suction portion is movable relative to the first suction portion in the first suction portion to cause the second suction opening to relatively move in and out of the first suction portion.
(9) In the processing device according to any one of (1) to (8), the suction assembly includes a suction portion including a suction pad. The suction force specifier specifies a suction force from the suction portion to suck the object based on the first object information and based on an environmental change in a viscoelastic characteristic of the suction pad.
(10) In the processing device according to any one of (1) to (9), the suction assembly includes a suction portion including a suction pad. The suction force specifier specifies a suction force from the suction portion to suck the object based on the first object information and based on a change over time in a viscoelastic characteristic of the suction pad.
(11) In the processing device according to any one of (1) to (10), the suction assembly includes a suction portion including a suction pad. The suction force specifier specifies a suction force from the suction portion to suck the object based on the first object information and based on a change in a viscoelastic characteristic of the suction pad with use.
(12) The processing device according to any one of (1) to (11) further includes a determiner that determines, based on a detection result from at least one sensor, a suction state of the suction assembly sucking the object.
(13) In the processing device according to (12), the suction force specifier re-specifies, based on a determination result from the determiner, a suction force from the suction assembly to suck the object.
(14) The processing device according to (12) or (13) further includes a notifier that provides, based on a determination result from the determiner, an alert to outside the control device.
(15) In the processing device according to any one of (1) to (14), the suction assembly includes at least one suction portion. The processing device further includes a position specifier that specifies a position of the at least one suction portion based on second object information about the object.
(16) In the processing device according to (15), the second object information includes at least one selected from the group consisting of shape information indicating a shape of the object, center-of-gravity position information indicating a position of a center of gravity of the object, first area information indicating an area on a surface of the object inaccessible to sucking performed by the suction assembly, and second area information indicating an area on the surface of the object prohibited from being sucked by the suction assembly.
(17) The processing device according to (15) or (16) further includes a suction assembly controller that controls the suction assembly based on a position specification result from the position specifier.
(18) A suction assembly controller is a suction assembly controller included in the processing device according to (4) or (17).
(19) A program is a program for causing a computer to function as the processing device according to any one of (1) to (17).
(20) A program is a program for causing a computer to function as the suction assembly controller according to (18).
(21) A processing system includes a suction assembly that sucks an object, and the processing device according to any one of (1) to (17) that specifies the suction force from the suction assembly to suck the object.
(22) A suction assembly is a suction assembly for sucking an object. The suction assembly includes a first suction portion including a first suction opening, a second suction portion including a second suction opening smaller than the first suction opening and movable relative to the first suction portion in the first suction portion, and a drive that moves the second suction portion relative to the first suction portion in the first suction portion to cause the second suction opening to relatively move in and out of the first suction portion. The drive is switchable between a first state in which the first suction portion sucks the object and a second state in which the second suction portion sucks the object.

### REFERENCE SIGNS

8 object
10 robot control system (processing system)
13 hand control device (processing device)
131a program
41, 200 suction portion
50, 50A drive
51 negative pressure generator
54 negative pressure sensor
55 pressure sensor
56 force sensor
57 range sensor
132 interface
135 suction force specifier
136 position specifier
137 suction assembly controller
138 determiner
210 first suction portion
220 second suction portion
211 first suction pad
212 first suction opening
221 second suction pad
222 second suction opening
410 suction pad

## Claims

1. A processing device, comprising:
a suction force specifier configured to specify, based on first object information about an object, a suction force from a suction assembly to suck the object.

2. The processing device according to claim 1, wherein
the first object information includes at least one selected from the group consisting of weight information indicating a weight of the object, first area information indicating an area on a surface of the object inaccessible to sucking performed by the suction assembly, second area information indicating an area on the surface of the object prohibited from being sucked by the suction assembly, and tilt limitation information indicating a limitation of tilt of the object.

3. The processing device according to claim 1 or claim 2, wherein
the suction assembly includes a plurality of suction portions, and
the suction force specifier is configured to specify, individually for each of the plurality of suction portions, a suction force from the suction portion to suck the object based on the first object information.

4. The processing device according to any one of claims 1 to 3, further comprising:
a suction assembly controller configured to control the suction assembly based on a suction force specification result from the suction force specifier.

5. The processing device according to claim 4, wherein
the suction assembly includes at least one suction portion and a negative pressure generator configured to generate a negative pressure in the at least one suction portion,
the suction force specifier is configured to specify, based on the first object information, a suction force from the at least one suction portion to suck the object, and
the suction assembly controller is configured to control the negative pressure generator based on the suction force specification result.

6. The processing device according to claim 4, wherein
the suction assembly includes a suction portion,
the suction force specifier is configured to specify, based on the first object information, a suction force from the suction portion to suck the object,
the suction portion includes
a first suction portion including a first suction opening, and
a second suction portion including a second suction opening smaller than the first suction opening,
the suction assembly is switchable between a first state in which the first suction portion sucks the object and a second state in which the second suction portion sucks the object, and
the suction assembly controller is configured to switch the suction assembly between the first state and the second state based on the suction force specification result.

7. The processing device according to claim 6, wherein
the suction assembly is switchable among the first state, the second state, and a third state in which the first suction portion and the second suction portion suck the object, and
the suction assembly controller is configured to switch the suction assembly among the first state, the second state, and the third state based on the suction force specification result.

8. The processing device according to claim 6, wherein
the second suction portion is movable relative to the first suction portion in the first suction portion to cause the second suction opening to relatively move in and out of the first suction portion.

9. The processing device according to any one of claims 1 to 8, wherein
the suction assembly includes a suction portion including a suction pad, and
the suction force specifier is configured to specify a suction force from the suction portion to suck the object based on the first object information and based on an environmental change in a viscoelastic characteristic of the suction pad.

10. The processing device according to any one of claims 1 to 9, wherein
the suction assembly includes a suction portion including a suction pad, and
the suction force specifier is configured to specify a suction force from the suction portion to suck the object based on the first object information and based on a change over time in a viscoelastic characteristic of the suction pad.

11. The processing device according to any one of claims 1 to 10, wherein
the suction assembly includes a suction portion including a suction pad, and
the suction force specifier is configured to specify a suction force from the suction portion to suck the object based on the first object information and based on a change in a viscoelastic characteristic of the suction pad with use.

12. The processing device according to any one of claims 1 to 11, further comprising:
a determiner configured to determine, based on a detection result from at least one sensor, a suction state of the suction assembly sucking the object.

13. The processing device according to claim 12, wherein
the suction force specifier is configured to re-specify, based on a determination result from the determiner, a suction force from the suction assembly to suck the object.

14. The processing device according to claim 12 or claim 13, further comprising:
a notifier configured to provide, based on a determination result from the determiner, an alert to outside the processing device.

15. The processing device according to any one of claims 1 to 14, wherein
the suction assembly includes at least one suction portion, and
the processing device further comprises a position specifier configured to specify a position of the at least one suction portion based on second object information about the object.

16. The processing device according to claim 15, wherein
the second object information includes at least one selected from the group consisting of shape information indicating a shape of the object, center-of-gravity position information indicating a position of a center of gravity of the object, first area information indicating an area on a surface of the object inaccessible to sucking performed by the suction assembly, and second area information indicating an area on the surface of the object prohibited from being sucked by the suction assembly.

17. The processing device according to claim 15 or claim 16, further comprising:
a suction assembly controller configured to control the suction assembly based on a position specification result from the position specifier.

18. A suction assembly controller included in the processing device according to claim 4 or claim 17.

19. A program for causing a computer to function as the processing device according to any one of claims 1 to 17.

20. A program for causing a computer to function as the suction assembly controller according to claim 18.

21. A processing system, comprising:
a suction assembly configured to suck an object; and
the processing device according to any one of claims 1 to 17, the processing device being configured to specify the suction force from the suction assembly to suck the object.

22. A suction assembly for sucking an object, the suction assembly comprising:
a first suction portion including a first suction opening;
a second suction portion including a second suction opening smaller than the first suction opening, the second suction portion being movable relative to the first suction portion in the first suction portion; and
a drive configured to move the second suction portion relative to the first suction portion in the first suction portion to cause the second suction opening to relatively move in and out of the first suction portion,
wherein the drive is switchable between a first state in which the first suction portion sucks the object and a second state in which the second suction portion sucks the object.
